# FASCICULE DE BREVET EUROPEEN

(11) **EP 2 981 174 B1**
(45) Date de publication et mention de la délivrance du brevet: **20.01.2021**
(21) Numéro de dépôt: 14718360.2
(22) Date de dépôt: 04.04.2014
(51) Int. Cl.: A23C 19/09, B65B 25/06, A23C 19/084, B65B 25/08, B65B 9/02, A01J 27/02, A23C 19/16, B65D 75/58

(54) **PROCÉDÉ D'ENROBAGE DE PRODUITS FROMAGERS**
VERFAHREN ZUM BESCHICHTEN VON KÄSEPRODUKTEN
METHOD FOR COATING CHEESE PRODUCTS

(30) Priorité: 05.04.2013 FR 1353076
(43) Date de publication de la demande: 10.02.2016
(73) Titulaire: BEL, 92150 Suresnes (FR)
(72) Inventeur: PENNARUN, Pierre-Yves, F-41100 Vendôme (FR)
(74) Mandataire: Lavoix
(86) Numéro de dépôt international: PCT/EP2014/056881
(87) Numéro de publication internationale: WO 2014/162009

(56) Documents cités:
- WO-A1-00/73148
- WO-A1-2006/131625
- WO-A1-2007/033296
- DE-A1- 10 122 635
- FR-A1- 2 886 518
- GB-A- 899 176
- US-A- 3 542 570
- US-A- 4 586 317

## Description

La présente invention concerne un procédé de préparation de produits fromagers enrobés et les produits fromagers enrobés obtenus. Plus particulièrement, l'invention vise à conditionner un matériau fromager sous forme visqueuse dans une enveloppe possédant les propriétés mécaniques d'une cire malléable à la température de conservation, ladite enveloppe étant étanche à l'humidité et aux microorganismes.

L'enrobage de produits fromagers se fait généralement par trempage, pulvérisation ou frottage du produit froid et figé, à l'aide d'une cire d'enrobage, d'origine fossile ou renouvelable, portée à l'état fondu, tel que décrit dans la demande de brevet FR 643128, par exemple. Ce type de produits, conditionné par exemple sous forme de portions de 20 g à 100 g, est généralement conservé au froid car non stérile. La cire enrobe le produit fromager, mais, à température ambiante, la durée de conservation est seulement de quelques jours. Les installations connues d'enrobage par trempage/pulvérisation sont peu adaptées à un conditionnement en conditions parfaitement stériles.

Ces produits avec enrobage font l'objet d'une forte demande des consommateurs du fait, notamment, de leur utilisation nomade très aisée et leur caractère ludique du fait des propriétés de malléabilité et de déchirabilité de l'enrobage.

Par ailleurs, les produits fromagers de type fromage fondu, particulièrement ceux se présentant sous la forme d'une pâte visqueuse, sont généralement conditionnés dans un emballage rigide, non malléable, dont la forme est préfabriquée (barquette plastique, film aluminium pré-embouti...), tel que décrit par exemple dans la demande de brevet FR 2 926 792 ou FR 2 886 518. Les propriétés du matériau utilisé sont telles que l'emballage conserve sa forme et qu'il peut être scellé pour isoler le produit du milieu extérieur. Selon ce procédé, le produit fromager est habituellement porté à l'état visqueux et versé en barquette ou en bi-coque à une température de l'ordre de 70 °C, la chaleur du produit permettant de réduire fortement le risque de contamination microbiologique venant de l'emballage et de l'opération de conditionnement

DE 101 22 635 A1 divulgue un procédé de préparation de fromage fondu emballé, comprenant la fourniture de deux films de matériau thermoplastique (polypropylène). Ce document enseigne la formation d'un emballage dans des moules grâce à de l'air comprimé et un scellage préalable au remplissage de l'emballage avec du fromage. Un scellage transversal est appliqué après le remplissage pour fermer l'emballage.

Toutefois, on ne connaît pas de procédé d'enrobage de produit fromager à l'état visqueux, conditionné à chaud ou à froid, dans un matériau d'enrobage présentant les propriétés avantageuses d'une cire d'enrobage malléable après refroidissement à la température usuelle de consommation ou de conservation (de 1 à 40°C), en particulier ses propriétés de barrière à l'humidité et aux microorganismes et sa capacité à être ouverte facilement par déchirement manuel de l'enrobage.

Un conditionnement classique sous cire par trempage ou pulvérisation est impossible pour les produits fromagers à l'état fondu et visqueux. En effet, à la température de conditionnement, le produit fromager et l'enrobage sont tous deux à l'état visqueux, et sont susceptibles de se mélanger partiellement si leurs viscosités respectives sont trop proches l'une de l'autre.

On recherche ainsi un produit fromager conditionnable à chaud ou à froid sous forme visqueuse avec un enrobage, en une ou plusieurs couches, le matériau d'enrobage étant suffisamment hydrophobe pour conférer une bonne protection et conservation au produit fromager, des propriétés de barrière totale contre les agents extérieurs (bactéries et moisissures altérant le produit) et barrière à l'humidité pour empêcher la perte d'eau du produit fromager (moins de 1% de perte en poids sur une période de 6 mois).

En dehors du domaine fromager, on connaît en effet des procédés de fabrication de capsules renfermant des produits non alimentaires, dont l'enrobage est constitué d'une composition hydrosoluble. De telles capsules sont par exemple des billes pour le bain contenant un produit cosmétique ou des capsules d'une solution médicamenteuse libérant le médicament par ingestion par le patient. De tels procédés, décrits par exemple dans les demandes internationales WO 03/039727 ou WO 03/039965, utilisent des compositions hydrosolubles telles que des compositions comprenant des gélatines, des amidons, des polymères synthétiques comme certains polymères acryliques, des biopolymères comme les polysaccharides, des gommes, des gélatines modifiées, des pullulanes, des glucomannanes, ou encore la cellulose et ses dérivés. Cependant, ces enrobages étant hydrosolubles et fortement perméables à l'eau, ils ne sont par conséquent pas adaptés pour l'enrobage de produits fromagers.

Le demandeur a réussi à développer un procédé et une composition d'enrobage associée, particulièrement adaptés pour le conditionnement de produits fromagers à l'état visqueux à chaud ou à froid, l'enrobage présentant les propriétés d'une cire d'enrobage à froid et ses avantages associés pour la conservation des produits et leur utilisation nomade.

### Procédé d'enrobage

A cet effet, l'invention a pour objet un procédé de préparation d'un produit fromager enrobé, ledit procédé comprenant les étapes de :
injection d'un matériau fromager à l'état visqueux entre deux films d'enrobage et au contact desdits films, lesdits films étant malléables à la température de conservation dudit produit fromager enrobé et comprenant chacun, en face externe, au moins une couche externe constituée d'une composition d'enrobage C1 à l'état gélifié, ladite composition d'enrobage comprenant :
- au moins un polymère hydrophobe, ou un mélange de polymères hydrophobes selon une teneur en poids d'au moins 5 % par rapport au poids total de la composition d'enrobage C1, le polymère hydrophobe étant choisi dans le groupe constitué des polyoléfines, des copolymères à base d'acétate de vinyle, des copolymères à base de styrène, des copolymères à base d'esters vinyliques d'acides gras, des copolymères à base d'acrylates d'alcools gras, des copolymères à base de méthacrylates d'alcools gras, des copolymères à base d'éthers d'alcools gras, des gommes hydrophobes, des gommes de base, et de leurs mélanges, et des polymères biosourcés, un plastifiant selon une teneur en poids de 0,1% à 50% par rapport au poids total de la composition d'enrobage C1, et
- un agent de charge selon une teneur en poids de 0,1% à 60% par rapport au poids total de la composition d'enrobage C1,
   a) les deux films d'enrobage étant séparés avant l'injection du matériau fromager, et dès l'injection réalisée, suit
   b) la mise en forme d'au moins un produit fromager enrobé, par pression sur la face externe de chacun desdits deux films d'enrobage, de manière à obtenir un produit fromager enrobé comprenant un cœur comprenant ledit matériau fromager et un enrobage malléable à la température de conservation dudit produit fromager enrobé et étanche à l'humidité et aux microorganismes, entourant totalement le cœur à sa périphérie, ledit enrobage étant constitué par l'assemblage par pression desdits deux films d'enrobage et comprenant au moins une couche externe constituée de ladite composition d'enrobage C1, dans lequel l'étape de mise en forme est réalisée en introduisant l'ensemble des deux films d'enrobage et du matériau fromager entre deux rouleaux rotatifs comportant des demi-empreintes complémentaires imprimant la forme souhaitée aux produits fromagers enrobés, la zone de scellage étant intégrée dans la surface de l'enrobage.

On entend ici par « la température de conservation » la température ou plage de températures à laquelle est conservé le produit fromager enrobé de l'invention avant sa consommation. Cette température est comprise de 1 °C à 40°C, de préférence de 1 °C à 30 °C, préférentiellement de 1 °C à 20 °C, par exemple de 2 °C à 10°C.

Selon le procédé de l'invention, lesdits films comprennent en outre chacun, en face interne, au moins une couche interne constituée d'une composition d'enrobage C2 à l'état gélifié, différente de ladite composition d'enrobage C1.

L'enrobage obtenu à l'issue de l'étape b) de mise en forme comprend au moins une couche externe constituée de ladite au moins une composition d'enrobage C1, et au moins une couche interne, différente de ladite au moins une couche externe, constituée d'au moins une composition d'enrobage C2, située entre le cœur et ladite au moins une couche externe.

### Produit fromager enrobé

L'invention a également pour objet le produit fromager enrobé susceptible d'être obtenu selon le procédé de l'invention ou selon la variante décrite ci-dessus

Le produit fromager enrobé susceptible d'être obtenu selon le procédé de l'invention est défini par le fait que le produit fromager enrobé comprend un matériau fromager à l'état visqueux et un enrobage malléable à la température de conservation dudit produit fromager enrobé et étanche à l'humidité et aux microorganismes entourant totalement le cœur à sa périphérie, dans lequel ledit enrobage est formé par deux films d'enrobage, lesdits films étant malléables à la température de conservation dudit produit fromager enrobé et comprenant chacun, en face externe, au moins une couche externe constituée d'une composition d'enrobage C1 à l'état gélifié, ladite composition d'enrobage comprenant :
- au moins un polymère hydrophobe, ou un mélange de polymères hydrophobes selon une teneur en poids d'au moins 5 % par rapport au poids total de la composition d'enrobage C1, le polymère hydrophobe étant choisi dans le groupe constitué des polyoléfines, des copolymères à base d'acétate de vinyle, des copolymères à base de styrène, des copolymères à base d'esters vinyliques d'acides gras, des copolymères à base d'acrylates d'alcools gras, des copolymères à base de méthacrylates d'alcools gras, des copolymères à base d'éthers d'alcools gras, des gommes hydrophobes, des gommes de base, et de leurs mélanges, et des polymères biosourcés,
- un plastifiant selon une teneur en poids de 0,1% à 50% par rapport au poids total de la composition d'enrobage C1. et un agent de charge selon une teneur en poids de 0,1% à 60% par rapport au poids total de la composition d'enrobage C1, et dans lequel la zone de scellage est intégrée dans la surface de l'enrobage.

Celui-ci possède un enrobage malléable à température de conservation, ledit enrobage étant de préférence déchirable.

La présente invention décrit aussi un produit fromager enrobé, comprenant un cœur comprenant un matériau fromager et un enrobage malléable à la température de conservation dudit produit fromager enrobé et étanche à l'humidité et aux microorganismes, entourant totalement le cœur à sa périphérie, ledit matériau fromager étant un fromage fondu, un fromage frais, un fromage frais fondu ou un fromage obtenu par un procédé de recombinaison, dans lequel la zone de scellage est intégrée dans la surface de l'enrobage,, dans lequel l'enrobage comprend au moins un polymère hydrophobe, ou un mélange de polymères hydrophobes selon une teneur en poids d'au moins 5 % par rapport au poids total de la composition d'enrobage C1, le polymère hydrophobe étant choisi dans le groupe constitué des polyoléfines, des copolymères à base d'acétate de vinyle, des copolymères à base de styrène, des copolymères à base d'esters vinyliques d'acides gras, des copolymères à base d'acrylates d'alcools gras, des copolymères à base de méthacrylates d'alcools gras, des copolymères à base d'éthers d'alcools gras, des gommes hydrophobes, des gommes de base, et de leurs mélanges, et des polymères biosourcés, un plastifiant selon une teneur en poids de 0,1% à 50% par rapport au poids total de la composition d'enrobage C1. et un agent de charge selon une teneur en poids de 0,1% à 60% par rapport au poids total de la composition d'enrobage C1.

Le cœur du produit fromager enrobé peut éventuellement se présenter sous la forme d'une structure de type noyau/enveloppe, dans laquelle ledit noyau est constitué d'un fourrage alimentaire, différent du matériau fromager, et est totalement entouré à sa périphérie par ladite enveloppe, elle-même constituée du matériau fromager.

A titre de fourrage alimentaire, on peut utiliser par exemple une composition alimentaire liquide, gélifiée ou visqueuse, fromagère ou non. On peut typiquement utiliser une composition alimentaire à base de fromage(s), à base de légume(s), de céréale(s), de chocolat ou à base de fruit(s).

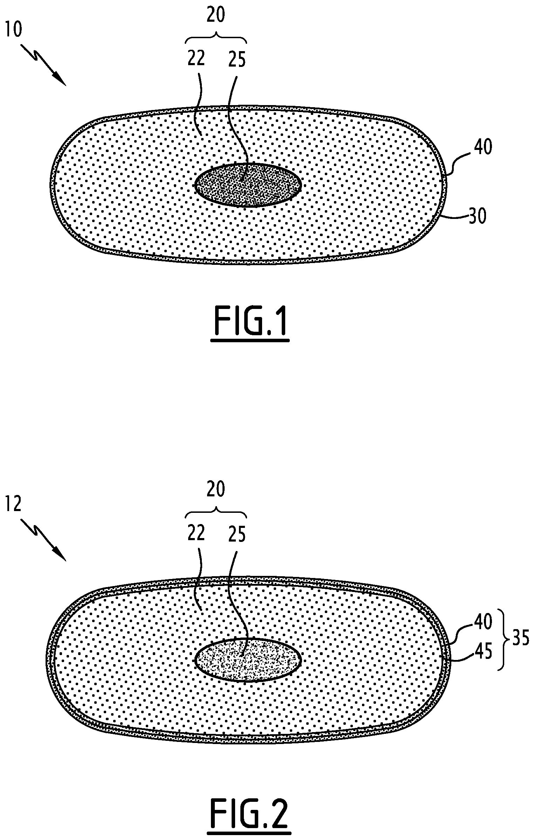

Dans le cadre de la présente demande, tel qu'illustré en coupe de manière schématique sur la Figure 1, on entend par « produit fromager enrobé » (10) un produit alimentaire comprenant :
- un cœur (20) comprenant un matériau fromager (22), et éventuellement un fourrage alimentaire (25), et
- un enrobage (30) étanche à l'humidité entourant totalement le cœur (20) à sa périphérie, ledit enrobage (30) comprenant au moins une couche externe (40) constituée d'au moins une composition d'enrobage C1.

Dans le cadre de la présente demande, tel qu'illustré en coupe de manière schématique sur la Figure 2, on entend également par « produit fromager enrobé » (12) un produit alimentaire comprenant :
- un cœur (20) comprenant un matériau fromager (22), et éventuellement un fourrage alimentaire (25), et
- un enrobage (35) malléable et étanche à l'humidité entourant totalement le cœur (20) à sa périphérie, ledit enrobage (35) comprenant au moins une couche externe (40) constituée d'au moins une composition d'enrobage C1, et au moins une couche interne (45), différente de ladite au moins une couche externe (40), constituée d'au moins une composition d'enrobage C2 située entre le cœur (20) et ladite au moins une couche externe (40).

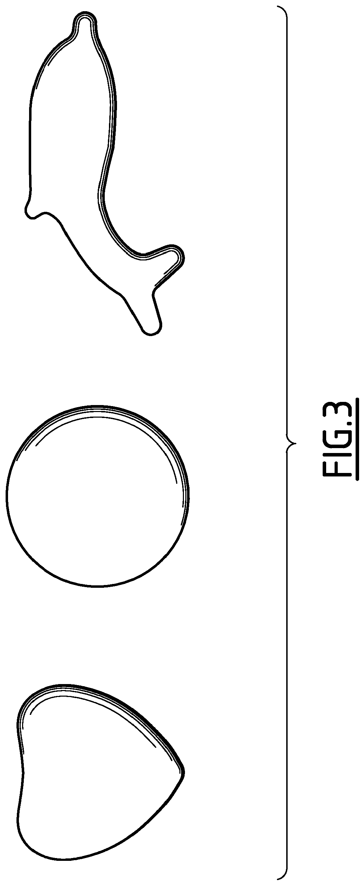

La Figure 3 représente différents exemples de formes possibles du produit fromager enrobé selon la présente invention.

Par « comprendre un » ou « comporter un », il convient d'entendre « comprendre au moins un » ou « comporter au moins un », sauf si le contraire est explicitement spécifié.

Le terme «X comprend Y et Z » couvre également le mode préférentiel dans lequel « X est constitué de Y et Z », sauf si le contraire est explicitement spécifié.

Selon un mode de réalisation, typiquement illustré en Figure 1, l'enrobage du produit fromager enrobé est constitué d'une couche externe constituée d'une composition d'enrobage C1. Selon ce mode de réalisation, la couche externe est au contact de l'air et isole l'intérieur du produit fromager enrobé de l'extérieur, notamment de l'humidité, des microorganismes, et éventuellement de l'air.

Selon un autre mode de réalisation, typiquement illustré en Figure 2, l'enrobage du produit fromager enrobé comprend ou est constitué d'une couche externe constituée d'une composition d'enrobage C1, et d'une couche interne constituée d'une composition d'enrobage C2, ladite couche interne étant située au contact du matériau fromager et de ladite couche externe. Selon ce mode de réalisation, la couche interne isole totalement le matériau fromager de la couche externe, et la couche externe est au contact de l'air et isole l'intérieur du produit fromager enrobé de l'environnement extérieur, notamment de l'humidité, et des microorganismes.

Selon un mode de réalisation avantageux, l'enrobage du produit fromager enrobé est un enrobage multicouche se composant :
- d'une couche interne au contact du matériau fromager et l'enrobant totalement,
- d'une couche intermédiaire au contact de ladite première couche interne et l'enrobant totalement, et
- d'une couche externe, identique ou différente de ladite couche interne, au contact de ladite couche intermédiaire et l'enrobant totalement.

Dans ce mode, au moins la couche externe est constituée d'une composition d'enrobage hydrophobe et isole le matériau fromager de l'environnement extérieur, notamment de l'humidité, des microorganismes, et éventuellement de l'air.

Les propriétés des couches interne et externe seront détaillées ci-après.

La présente invention présente également l'avantage d'obtenir un produit fromager enrobé pouvant être façonné selon différentes géométries lors de l'étape de mise en forme grâce aux propriétés ductiles de l'enrobage.

Plus particulièrement, le procédé de l'invention permet d'accéder à des produits fromagers enrobés de tailles et de forme diverses, comme par exemple un disque épais (type Minibabybel®), des formes géométriques telles qu'une boule, une forme ovoïde, triangulaire ou parallélépipédique, des formes d'animaux, de fruits et légumes, de flacons, etc... De plus, de par ses propriétés de viscosité lors de l'injection, le produit fromager prend également la forme du moule et donc de son enrobage. Les produits fromagers enrobés peuvent avoir le format de portions individuelles (5 à 40 g environ) ou un format pièce (40 à 600 g environ).

Contrairement aux portions de fromages frais ou de fromages fondus emballées dans des enrobages rigides ou des films souples, sous aluminium par exemple, le procédé d'enrobage de l'invention permet d'obtenir des produits fromagers enrobés avec un enrobage parfaitement étanche et hermétique, avec ou sans système d'ouverture, ce qui réduit considérablement le risque de contamination.

Selon les besoins d'ouverture, un système d'ouverture est avantageusement incorporé entre le matériau fromager et l'enrobage ou bien encore dans la structure de l'enrobage. Ledit système d'ouverture est typiquement placé sur un des films d'enrobage ou intégré à celui-ci avant l'injection du matériau fromager au contact des films d'enrobage. Ce système d'ouverture est similaire à ce que l'on peut trouver sur des fromages sous cire (ganse) ou sur des opercules déchirables et pelables (tircel), ou bien encore sous forme de tissu de renfort que l'on peut trouver dans des matériaux composites dits « pré-imprégnés ». Ce système d'ouverture permet de déchirer le matériau présentant des propriétés de malléabilité connues de l'homme du métier, à savoir les propriétés proches d'une cire fromagère que l'on peut voir sur des produits tels que le Gouda, le Babybel® ou encore le MiniBabybel®. Cette malléabilité peut être décrite par le coefficient de pénétration à 25°C du matériau mesuré selon la norme ASTM D1321 - 10, et est typiquement de 0,5 à 6,0 mm. Après avoir déchiré le matériau d'enrobage, le produit peut être extrait manuellement de son enrobage en plusieurs étapes selon le nombre de segments d'enrobage obtenus après son déchirement.

Il est en outre précisé ci-après plusieurs avantages importants du procédé selon l'invention par rapport aux procédés de l'état de la technique mis en œuvre dans une installation habituelle de fromagerie avec unités de moulage.

L'espace occupé par les dispositifs permettant la mise en œuvre du procédé de l'invention est réduit, ce qui peut même permettre d'avoir des installations de fabrication mobiles. En effet, le procédé ne requiert pas l'utilisation de moules individuels et l'installation ne nécessite pas d'espace de stockage desdits moules individuels. En outre, selon le procédé de l'invention, le changement des moules rotatifs pour produire des produits fromagers de n'importe quelle forme est très simplifié.

De plus, le temps de prise en masse (gel) des matériaux fromagers en moules individuels avant de pouvoir les enrober, typiquement au moins deux jours après le dosage, est évité, cette prise en masse se faisant directement au sein de l'enrobage.

Le procédé de l'invention permet la production en continu de produits fromagers enrobés, et peut être aisément automatisé en contrôlant le débit d'injection du matériau fromager.

### Films d'enrobage

Avant l'étape a) d'injection, les films d'enrobage sont de préférence préalablement formés par fourniture de la composition d'enrobage C1 ou des compositions d'enrobage C1 et C2 correspondantes à l'état visqueux.

La fourniture de ladite composition d'enrobage C1 et/ou C2 à l'état visqueux est avantageusement suivie d'une étape de refroidissement par laquelle ladite composition d'enrobage C1 et/ou C2 passe à l'état gélifié.

La composition d'enrobage C1 est typiquement coulée à l'état visqueux sur deux rouleaux distincts, puis est refroidie au contact desdits rouleaux, afin de passer à l'état gélifié et ainsi former la couche externe de chacun des deux films d'enrobage.

Lorsqu'un film d'enrobage comprend en outre une couche interne, une composition d'enrobage C2 est déposée sur la couche externe de composition d'enrobage C1 déjà formée sur un rouleau, et éventuellement déjà à l'état gélifié, pour former ladite couche interne.

Par « état visqueux », on entend que la composition d'enrobage s'écoule tel un fluide sous l'action de la gravité ou sous l'action d'une pression appliquée sur ladite composition d'enrobage, typiquement lors de sa fourniture.

On entend par « état gélifié » que les matériaux des compositions d'enrobage sont figés et sensiblement solides, ne s'écoulent pas sous l'action de la gravité ou sous l'action d'une pression. A l'état « gélifié », ces matériaux sont cependant suffisamment malléables pour permettre le scellage du produit fromager enrobé lors de l'étape de mise en forme.

Selon la présente invention, l'état « gélifié » désigne notamment l'état « solide semi-cristallin », qui est obtenu après cristallisation desdits matériaux.

Dans le cadre de la présente invention, par « matériau malléable », on entend un matériau ayant un comportement plastique ductile, c'est-à-dire l'aptitude à se déformer de façon non réversible sous l'effet d'une seule et unique contrainte mécanique, par étirement ou par compression. De plus, après cette première déformation, et de par ses propriétés de malléabilité, ce matériau présente également l'aptitude de pouvoir être modelé, découpé et recomposé à volonté à la température de conservation ou de consommation, à l'instar d'une pâte à modeler. Un matériau malléable diffère donc d'un matériau d'emballage de type film ou coque, typiquement uniquement constitué de polyéthylène ou de polypropylène, qui après étirement, ne peut être remodelé aux températures de conservation ou de consommation.

La malléabilité d'un matériau est typiquement mesurée par un coefficient de pénétration dans le matériau d'un poinçon, selon la méthode définie dans la norme ASTM D1321 - 10. Pour un matériau dit malléable, le coefficient de pénétration mesuré à 25°C est typiquement compris de 0,1 à 12,0 mm, préférentiellement de 0,1 à 9,0 mm et plus préférentiellement de 0,1 à 6,0 mm.

Par « matériau ductile », on entend un matériau plastique pour lequel la déformation générée par une contrainte mécanique, est tout d'abord élastique puis acquise définitivement par écoulement visqueux.

Lors de sa fourniture, ladite au moins une composition d'enrobage C1 est typiquement portée à une température T₁ à laquelle ladite composition C1 est à l'état visqueux. La température T₁ est de préférence de 70°C à 180°C, avantageusement de 70°C à 130°C.

La température T₁ est supérieure à la température de transition liquide-solide (TLS) ou liquide-gel (TLG) de la composition d'enrobage C1 (température à laquelle la composition d'enrobage C1 passe de l'état de liquide visqueux décrit précédemment, à l'état solide semi-cristallin ou à l'état gélifié décrit précédemment), et avantageusement supérieure de 2°C à 30°C, et plus avantageusement supérieure de 2°C à 20°C à ladite température de TLS ou TGL.

Lors de sa fourniture, ladite au moins une composition d'enrobage C2 est typiquement portée à une température T₂ à laquelle ladite composition C2 est à l'état visqueux. La température T₂ est de préférence de 70°C à 120°C, de préférence de 70°C à 100°C.

La température T₂ est supérieure à la température de transition liquide-solide (TLS) ou liquide-gel (TLG) de la composition d'enrobage C2 (température à laquelle la composition d'enrobage C2 passe de l'état de liquide visqueux à l'état solide semi-cristallin ou à l'état gélifié), et avantageusement supérieure de 2°C à 30°C, et plus avantageusement supérieure de 2°C à 20°C à ladite température de TLS ou TGL.

Les deux films étant séparés avant l'injection du matériau fromager, ils peuvent avoir des structures et des propriétés différentes, notamment en termes de couleur ou de texture de surface.

Selon un mode de réalisation, au moins un des deux films d'enrobage est monocouche, c'est-à-dire qu'il est constitué d'une unique couche constituée d'une composition d'enrobage C1. Les deux films d'enrobages peuvent aussi être monocouches et chacun constitués d'une composition d'enrobage C1, identique ou différente.

Alternativement, au moins un des deux films d'enrobage est multicouche, c'est-à-dire qu'il est constitué d'au moins deux couches. Un film multicouche peut être bicouche, c'est-à-dire constitué d'une couche interne et d'une couche externe, différente de la couche interne.

Un film multicouche peut être constitué d'une superposition de 3 couches ou plus, de compositions différentes. De préférence, les couches de type similaire (par exemple hydrophiles ou hydrophobes) sont au contact les unes des autres.

Dans un enrobage multicouche, en particulier lorsque l'enrobage comprend une ou plusieurs couches hydrophobes et une ou plusieurs couches hydrophiles, la ou les couches hydrophiles sont avantageusement une barrière contre la migration des constituants de la ou des couches hydrophobes dans le matériau fromager (et inversement), et la ou les couches hydrophobes assure(nt) avantageusement une barrière à l'humidité et aux microorganismes.

Dans un film d'enrobage multicouche tel que décrit ci-dessus, comprenant typiquement une couche interne, une couche intermédiaire et une couche externe, ladite couche intermédiaire sert de compatibilisant entre lesdites couches interne et externe.

On entend par « compatibilisant » un matériau permettant d'assurer une adhésion entre deux couches pour lesquelles les propriétés d'adhésion sont faibles voire inexistantes. Ce compatibilisant peut être un polymère, un polymère contenant des additifs, un polymère possédant des fonctions ioniques, un mélange de polymères ou encore un polymère contenant des agents de charge.

Alternativement, un matériau compatibilisant peut être intégré au sein d'une couche dite interne et/ou d'une couche dite externe.

La face externe desdits films est destinée à constituer la surface externe de l'enrobage du produit fromager enrobé, elle-même destinée à être au contact de l'air.

La face interne desdits films est destinée à constituer la surface interne de l'enrobage du produit fromager enrobé, elle-même destinée à être au contact du matériau fromager.

Chacun des films présente typiquement une épaisseur de 0,1 mm à 5 mm, de préférence de 0,1 mm à 3 mm, avantageusement de 0,2 mm à 2 mm.

Selon une variante, un système d'ouverture est ajouté lors de la formation des films d'enrobage.

### Injection

L'étape d'injection est typiquement réalisée en déroulant les deux films d'enrobage à l'état gélifié en continu l'un en face de l'autre et en injectant le matériau fromager destiné à être enrobé à l'état visqueux entre les deux films, typiquement à l'aide d'une buse d'injection.

Préalablement à l'injection du matériau fromager entre les deux films d'enrobage, lesdits films sont avantageusement rapprochés l'un de l'autre, de manière à délimiter un espace destiné à être empli par le matériau fromager injecté à l'état visqueux.

Dans le cas où le cœur du produit fromager enrobé comporte un fourrage alimentaire, ledit fourrage et le matériau fromager à l'état visqueux sont typiquement co-injecté à l'aide d'une buse coaxiale comportant un orifice central par lequel est injecté le fourrage et un orifice périphérique par lequel est injecté le matériau fromager.

Le matériau fromager injecté à l'étape a) est porté à une température Tₐ à laquelle ledit matériau fromager est à l'état visqueux.

Par « état visqueux », on entend que le matériau fromager s'écoule tel un fluide sous l'action de la gravité ou sous l'action d'une pression appliquée sur ledit matériau fromager.

La température Tₐ est de préférence de 50°C à 100°C, avantageusement de 70°C à 95°C et par exemple de 70°C à 75°C.

De préférence, la température Tₐ est inférieure à la TLS ou à la TLG de la composition d'enrobage C1. Lorsque la couche d'enrobage C2 est présente, la température Tₐ est de préférence inférieure à la TLS ou à la TLG de la composition d'enrobage C2. Ceci permet d'éviter que l'injection du matériau fromager à l'état visqueux au contact des films d'enrobage à l'état gélifié ne déstabilise la structure desdits films.

### Mise en forme

L'ensemble des deux films d'enrobage et du matériau fromager (et éventuellement du fourrage) injecté à l'issue de l'étape a) d'injection est ensuite mis en forme lors de l'étape b), pour fournir un produit fromager enrobé ou une série de produits fromagers enrobés tels que définis ci-dessus.

Par « mise en forme », on entend le moulage et le scellage de l'enrobage autour du cœur de matériau fromager, par lequel on obtient un ou une série de produits fromagers enrobés, scellés et hermétiques.

L'étape de mise en forme est par exemple réalisée en introduisant l'ensemble des deux films d'enrobage et du matériau fromager entre deux rouleaux rotatifs comportant des demi-empreintes complémentaires imprimant la forme souhaitée aux produits fromagers enrobés. Des exemples de machines permettant de réaliser ces enrobages de matériau fromager sont les machines dites « Softgel » de Caplustech, comme par exemple la « R1 Softgel Machine ».

Lors de la mise en forme, les films sont de préférence maintenus à une température inférieure à la température de fusion ou de gélification des compositions d'enrobage, et avantageusement inférieure de 2°C à 30°C, plus avantageusement de 2°C à 15°C, à ladite température de fusion ou de gélification, ce qui confère aux films des propriétés de malléabilité très élevée et permet leur scellage par pression, par exemple entre les rouleaux rotatifs décrits ci-dessus.

De préférence, lors de l'étape de mise en forme, les films ne sont pas chauffés à une température excédant leur température de fusion ou de gélification.

La mise en œuvre de ce mode de réalisation est par exemple réalisée au moyen des dispositifs utilisés pour préparer les capsules de type « softgel » (RP Scherer), décrits dans les brevets US 1,970,396, US 2,152,101 et US 2,288,327.

L'étape de mise en forme du procédé de l'invention permet de mettre en forme l'enrobage autour du matériau fromager et de sceller ledit enrobage, la zone de scellage étant intégrée dans la surface de l'enrobage. De préférence, l'étape de mise en forme permet de ne pas laisser de zone de scellage apparente, sous forme de buvant ou de bourrelet. Ainsi, l'enrobage est déchirable par une action mécanique d'ouverture volontaire. Pour faciliter cette ouverture, on utilise avantageusement tout système d'ouverture intégré au moment de la formation des films d'enrobage ou de la mise en forme de l'enrobage, et permettant de déchirer l'enrobage et de donner accès au matériau fromager.

L'étape de mise en forme permet de conditionner, en une seule étape, le matériau fromager dans son enrobage, sans risque de contamination lors du conditionnement.

En particulier, le procédé de l'invention permet de conditionner un matériau fromager, à l'état visqueux, à chaud ou bien à froid, dans un enrobage étanche à l'humidité et aux micro-organismes. Dès l'injection réalisée, l'étape de mise en forme suit de préférence immédiatement. Le procédé de l'invention permet ainsi de conditionner un matériau fromager sans risque de contamination microbienne extérieure lors de ladite étape de conditionnement, et ce jusqu'à la consommation du produit.

Le procédé de l'invention permet la production en continu de produits fromagers enrobés, et peut être aisément automatisé en contrôlant le débit d'injection en matériau fromager.

A l'issue de l'étape de mise en forme, le produit fromager enrobé obtenu est typiquement libéré et collecté.

Le matériau fromager peut être refroidi au cours de la mise en forme ou bien après la mise en forme lors d'une étape ultérieure de refroidissement, jusqu'à une température inférieure à 20°C, et plus particulièrement inférieure à 6°C (température usuelle de conservation dans un réfrigérateur), par exemple entre 0 et 6°C.

L'invention permet ainsi d'accroitre la sécurité alimentaire du produit fromager enrobé obtenu, et donc sa durée de conservation, tout en préservant ses propriétés organoleptiques et en offrant au consommateur un emballage ludique. En effet, de par son enrobage malléable à température de consommation et conservation, le consommateur et plus particulièrement les enfants pourront s'amuser avec ce matériau d'enrobage comme avec de la pâte à modeler.

### Matériau fromager

Dans le cadre de la présente demande, on entend par « matériau fromager » tout produit alimentaire :
- obtenu par traitement du lait, que ce dernier soit du lait de vache, de chèvre, brebis, bufflesse, etc., et/ou
- obtenu au moins en partie à partir de matières premières d'origine laitière, et le cas échéant d'autres ingrédients alimentaires.

Pour être appropriée pour la mise en œuvre du procédé selon l'invention, il est souhaitable que le matériau fromager puisse se présenter sous une forme visqueuse aisément injectable, puis se solidifier en une texture suffisamment solide, en particulier de type gel, pour ne pas couler de l'enrobage de manière non souhaitée, lors du déchirement de l'enrobage.

Les matériaux fromagers incluent notamment :
- les « fromages fondus » et les spécialités fromagères fondues (par exemple Vache qui rit®), obtenus à partir de la fonte (typiquement en présence de sels de fonte) de fromages naturels,
- les spécialités fromagères, obtenues par d'autres procédés que les procédés de fonte, en particulier les spécialités fromagères obtenues par des procédés dits de recombinaison (tels que décrits dans les demandes WO 2008/151820 et EP 1 788 884), et les procédés de retexturation (tels que décrits dans les brevets FR 2 778 821 et FR 2 818 501), et
- tout autre fromage ou spécialité fromagère tel que du fromage frais ou du fromage frais fondu (obtenus typiquement à partir de caillé lactique par exemple, comme connu de l'homme du métier) présentant une structure visqueuse adaptée à l'utilisation selon le procédé de la présente invention (par exemple Kiri® ou Boursin®).

Le matériau fromager utilisé dans le cadre du procédé de l'invention est typiquement un fromage fondu, un fromage frais, un fromage frais fondu ou un fromage obtenu par un procédé de recombinaison.

Le matériau fromager selon l'invention est aisément injectable via une buse d'injection, particulièrement lorsqu'il est à l'état visqueux.

Par « état visqueux » à la température T, on entend que le matériau fromager, porté à cette température, s'écoule tel un fluide sous l'action de la gravité ou sous l'action d'une pression appliquée sur ledit matériau fromager, typiquement lors de son injection.

Un matériau fromager à l'état visqueux présente typiquement une viscosité de cisaillement de 0,1 à 1000 Pa.s, et plus préférentiellement de 1 à 100 Pa.s, telle que mesurée à 75°C et à une vitesse de cisaillement de 10 s⁻¹ avec un rhéomètre Rheolab QC de Anton Paar.

De préférence, le matériau fromager du produit fromager enrobé final est un fromage fondu, frais ou frais fondu, qui se présente sous la forme d'une pâte tartinable à la température de consommation, typiquement de 4°C à 25°C.

De préférence, le matériau fromager du produit fromager enrobé final est un fromage, fondu ou non, qui se présente sous la forme d'une pâte ferme à la température de consommation, typiquement de 4°C à 25°C.

Pour la réalisation d'un « fromage naturel », le lait de départ est standardisé ou non en protéines et matières grasses, pasteurisé ou non et coagulé, soit par l'action d'agents coagulants tels que la présure ou ses succédanés, soit par ensemencement du lait avec des bactéries lactiques et acidification jusqu'à obtention du point isoélectrique de la caséine (pH = 4,6), soit par l'action conjuguée des deux modes précédents, égouttés, mis en forme, saumurés et éventuellement pressés et/ou affinés par action d'une flore spécifique d'affinage que l'on laisse développer dans les conditions optimales en hâloirs jusqu'à l'obtention des caractéristiques organoleptiques souhaitées.

Selon la nature du lait, le mode de coagulation, la présence ou non d'une étape d'affinage, on obtient une gamme étendue de produits de départ, que l'on classe en fromages frais (coagulation lactique, peu ou pas d'affinage, extrait sec faible (généralement inférieur à 40%), fromages à pâte molle (coagulation mixte, égouttage et éventuellement affinage, extrait sec supérieur aux précédents : supérieur à 35-40% mais généralement inférieur à 50%) et fromages à pâte pressée (coagulation présure, pressage et souvent affinage, et extrait sec élevé, supérieur à 45%).

Selon un mode de réalisation, le matériau fromager utilisé dans le cadre du procédé de l'invention est un fromage naturel, tel qu'un fromage frais. On peut également utiliser un matériau fromager à base de fromage à pâte molle ou de fromage à pâte pressée, éventuellement retexturé.

Selon un autre mode de réalisation, le matériau fromager utilisé dans le cadre du procédé de l'invention est un fromage fondu.

On entend par « fromage fondu » ou spécialité fromagère fondue, le produit obtenu par la fonte, sous traitement thermomécanique et généralement sous vide partiel, de fromages en présence ou non de sels de fonte. Les matières premières utilisées sont préférentiellement des fromages à pâte pressée mais tout type de fromages naturels tels que définis ci-dessus est également approprié. On peut aussi utiliser des « caillés » à caractère présure ou lactique.

Par ailleurs, on peut ajouter à la formule de la poudre de lait écrémé ou non, du beurre, de la MGLA (matière grasse laitière anhydre), de la poudre de lactosérum, ou des concentrés protéiques sous forme liquide ou en poudre. On peut remplacer partiellement ou totalement la matière grasse laitière par de la matière grasse végétale et les protéines par des protéines végétales. La formule peut également comprendre des agents de texture tels que hydrocolloïdes. L'utilisation de ces derniers est un avantage lorsque l'on met en œuvre des matières premières humides (faible extrait sec) pour obtenir des produits à texture très souple. La fabrication de fromage fondu est parfaitement décrite dans le livre de ECK et GILLIS J.C., A : « Le fromage », 3ème édition, Ed. Lavoisier Paris, auquel on pourra se référer pour de plus amples détails.

Dans le cadre de l'invention, on prépare selon les techniques traditionnelles le fromage fondu ou la préparation fromagère fondue par fonte de fromages d'une seule catégorie ou d'un mélange de variétés selon les caractéristiques de goût que l'on veut obtenir.

Par ailleurs, la matière première fromagère de départ est fonction des caractéristiques organoleptiques que l'on veut conférer au fromage ou à la matière première fromagère fondue ou au produit final. Ainsi, par exemple, dans le cas où l'on veut conférer au produit final des caractéristiques organoleptiques (goût et arômes) de produits à pâte molle de type camembert, on prépare un fromage fondu à partir de la fonte de camembert.

Dans un mode préférentiel de l'invention, la matière première fromagère à fondre sera choisie dans la famille des pâtes molles à croûte naturelle, des fromages frais ou des caillés frais lactiques ou présure ou le mélange de ces composants.

On peut citer pour les fromages de départ, les fromages à pâte molle et croûte blanche tels que le Brie ou le Camembert, les fromages à pâte persillée tels que le Gorgonzola et le Roquefort, les fromages à croûte colorée tels que le Munster et le Maroilles, les fromages à pâte pressée tels que le Gouda, l'Edam, le Cantal, l'Emmental, le Maasdam et le Cheddar vieux ou jeune.

Les fromages fondus sont généralement préparés par traitement thermique à une température de 60°C à 100°C et par traitement mécanique sous faible cisaillement.

On entend par « faible cisaillement » les contraintes non supérieures à celles exercées dans un équipement de type « cutter » à des vitesses allant jusqu'à 1 200 rpm.

On peut citer par exemple les traitements réalisés dans des appareils du commerce de type cutter (par exemple ceux commercialisés sous la dénomination STEPHAN®) utilisés traditionnellement en charcuterie ou en fabrication de fromage fondu tournant à des vitesses comprises entre 250 et 1 200 rpm, avantageusement 300 et 600 rpm; des appareils de type pétrin, mélangeur, malaxeur, cuiseur-mélangeur, co-malaxeur, extrudeur sont également appropriés.

Selon encore un autre mode de réalisation, le matériau fromager utilisé dans le cadre du procédé de l'invention est une autre spécialité fromagère.

Par « autres spécialités fromagères », on entend toute spécialité fromagère connue obtenue par un procédé autre que les procédés de fonte, et de préférence des spécialités fromagères obtenues par recombinaison ou par retexturation. Différents procédés de préparation sont connus de l'homme du métier.

Des préparations sont obtenues à partir de poudre de lait, de rétentats (concentrés de lait) obtenus par ultrafiltration. Ces procédés rapides permettent l'obtention de fromage en seulement quelques étapes : mélange de la poudre de lait à de l'eau, des solutions d'acides ou des graisses, ajout éventuel d'enzymes, chauffage du mélange ainsi obtenu, ajout d'additifs divers. Ces technologies utilisent la recombinaison pour la réalisation des fromages à partir de concentrés protéiques laitiers en poudre et de beurre principalement. Par exemple, le document WO 03/051130 décrit le mélange de matières protéiques concentrées (MPC) avec des matières grasses de manière à obtenir une pâte protéique, puis l'addition d'eau, d'acides, de ferments acidifiants, puis chauffage à 75-95°C, refroidissement et moulage.

Une autre catégorie de technologies est décrite dans les documents WO 2006/030128 et WO 2008/151820, permettant l'obtention de fromages à partir d'un processus de recombinaison efficace à partir de poudres laitières spécifiques et d'outils de recombinaison adéquats. L'utilisation de concentrés protéiques appauvris en lactose (c'est-à-dire comprenant moins de 10% en poids de lactose, par rapport au poids total) est requise pour éviter une acidification trop importante dans les étapes successives à l'addition des ferments d'acidification, ce qui empêcherait l'obtention de produits de type fromages traditionnels affinés.

Des procédés de retexturation connus sont décrits par exemple dans la demande EP 1345497, qui permet d'obtenir un produit de type pâte fromagère visqueuse.

### Enrobage

Les matériaux utilisés pour l'enrobage sont adaptés au contact alimentaire, et préférentiellement de grade « alimentaire », mais ne sont pas destinés à être ingérés. Il est donc nécessaire d'éliminer l'enrobage du produit fromager enrobé avant la consommation du matériau fromager que celui-ci renferme.

L'enrobage n'adhère pas au matériau fromager lors de son élimination, au moment de la consommation du matériau fromager.

Selon un mode de réalisation, l'enrobage est éliminé en le déchirant par pincement avant la consommation du matériau fromager. De préférence, l'enrobage comprend un matériau plastique, ductile et est malléable.

On entend par « matériau plastique » un matériau qui est susceptible de se déformer suivant un comportement viscoélastique plastique.

Selon un autre mode de réalisation, l'enrobage du produit fromager comprend un système d'ouverture permettant l'ouverture de l'enrobage par déchirement et permettant éventuellement de renforcer la structure de l'enrobage.

Selon un autre mode de réalisation, l'enrobage est éliminé en le cassant, le matériau fromager étant avantageusement retiré de l'enrobage par pression entre les doigts d'une même main. Dans ce cas précis, le matériau d'enrobage a un comportement viscoélastique fragile.

L'enrobage présente typiquement une épaisseur de 0,1 mm à 5 mm, de préférence de 0,1 mm à 3 mm, avantageusement de 0,2 mm à 2 mm.

L'enrobage est stable jusqu'à une température d'au moins 45°C, c'est-à-dire qu'il ne fond pas et ne présente pas de changement significatif de texture et de structure.

### Propriétés de l'enrobage

L'enrobage du produit fromager enrobé a les propriétés mécaniques d'une cire malléable à température de conservation ou de consommation (de 1°C à 40°C).

L'enrobage du produit fromager enrobé selon l'invention présente de préférence les propriétés d'une cire d'enrobage classiquement utilisée pour enrober des fromages à pâte ferme par trempage dans ladite cire à l'état fondu, notamment tel que décrit dans la demande de brevet FR 643128.

L'enrobage permet d'éviter, d'une part, la dessiccation du matériau fromager au cours de sa conservation et de sa commercialisation et, d'autre part, la contamination et l'altération du fromage par des microorganismes.

L'enrobage autour du matériau fromager se compose d'une ou plusieurs couches et comporte au moins une couche d'enrobage étanche à l'humidité et aux microorganismes, et éventuellement à l'air.

Par « étanche à l'humidité », on entend que l'humidité ne traverse pas l'enrobage de façon significative, et que le produit fromager enrobé ne se dessèche pas.

On peut évaluer le dessèchement d'un produit fromager enrobé selon l'invention en mesurant la perte en masse au cours du temps dudit produit fromager conservé à 4°C avec une humidité relative de 70%. La perte en masse par dessèchement d'un produit fromager enrobé selon l'invention est inférieure à 1% après un mois dans ces conditions. A titre de témoin, dans les mêmes conditions, la perte en masse d'un produit fromager non enrobé de 20 g est de 6% en seulement deux jours.

Par « étanche aux microorganismes », on entend que les microorganismes ne traversent pas l'enrobage et que l'enrobage isole totalement le produit fromager des microorganismes.

De préférence, l'enrobage du produit fromager enrobé est étanche à l'air.

Par « étanche à l'air », on entend que l'air, en particulier l'oxygène, ne traverse pas l'enrobage.

Cette propriété permet de contribuer à éviter le dessèchement et l'altération par les microorganismes du produit fromager enrobé.

### Couche externe et composition d'enrobage C1

La composition d'enrobage C1 comprend au moins un polymère hydrophobe qui confère à la couche externe son imperméabilité à l'humidité et aux microorganismes, et éventuellement à l'air. La couche externe fait barrière à l'extérieur et protège le produit fromager.

La couche externe est compatible avec le contact alimentaire mais n'est généralement pas ingérable.

La couche externe présente un caractère hydrophobe, c'est-à-dire que l'eau ne s'étale pas au contact de ladite couche, mais forme des gouttelettes avec un angle de contact élevé, généralement supérieur à 90°.

Par polymère « hydrophobe », on entend un polymère insoluble en milieu aqueux, dans lequel la solubilité de l'eau est très faible (typiquement inférieure à 1% en masse), et apte à conférer à la composition le contenant un caractère imperméable à l'humidité et à l'eau (sous forme liquide ou vapeur). Un polymère hydrophobe est typiquement issu de la polymérisation d'un mélange de monomères comprenant des monomères hydrophobes, comme par exemple des monomères de type hydrocarbures ou des monomères comportant au moins une chaîne grasse hydrocarbonée. Les polymères hydrophobes sont généralement exempts de fonctions hydrophiles telles que des fonctions électriquement chargées, des fonctions anioniques ou cationiques, des fonctions polaires, ou des fonctions susceptibles de former des liaisons hydrogène avec des atomes d'oxygène et d'azote.

Typiquement, le polymère hydrophobe ou le mélange de polymères hydrophobes est présent dans la composition d'enrobage C1 selon une teneur en poids d'au moins 5%, de préférence au moins 10%, et avantageusement d'au moins 20%, et préférentiellement d'au moins 50%, par rapport au poids total de la composition d'enrobage C1.

De préférence, la composition d'enrobage C1 est exempte d'eau.

De préférence, la composition d'enrobage C1 est essentiellement constituée d'un polymère hydrophobe ou d'un mélange de polymères hydrophobes, les autres constituants de ladite composition d'enrobage C1 étant des additifs minoritaires.

Le polymère hydrophobe est choisi dans le groupe constitué des polyoléfines, des copolymères à base d'acétate de vinyle, des copolymères à base de styrène, des copolymères à base d'esters vinyliques d'acides gras, des copolymères à base d'acrylates d'alcools gras, des copolymères à base de méthacrylates d'alcools gras, des copolymères à base d'éthers d'alcools gras et leurs mélanges.

Le polymère hydrophobe peut également être choisi parmi les polymères biosourcés comme les résines terpéniques et ses dérivés sous forme hydrogénée ou sous forme ester, les gommes hydrophobes comme la colophane et ses dérivés, sous forme hydrogénée ou sous forme esters.

Le polymère hydrophobe peut également être choisi parmi les gommes de base, telles que mentionnées ci-après.

Le terme « polyoléfine » désigne un polymère issu de la polymérisation d'une oléfine ou d'un mélange d'oléfines. Le terme « oléfine » ou « alcène » désigne un hydrocarbure insaturé, linéaire ou ramifié, typiquement en C₂-C₁₀, comportant au moins une liaison C=C.

A titre de polyoléfines, on peut citer par exemple le polyéthylène et le polypropylène.

Le terme « copolymère à base d'acétate de vinyle » désigne un copolymère, statistique ou à blocs, issu de la polymérisation d'un mélange de monomères comprenant au moins 10%, de préférence au moins 30%, avantageusement au moins 50% et plus avantageusement au moins 70% en masse, d'acétate de vinyle par rapport à la masse totale de monomères.

A titre de copolymères à base d'acétate de vinyle, on peut citer par exemple des copolymères à base d'acétate de vinyle et d'éthylène ou des copolymères à base d'acétate de vinyle et de laurate de vinyle, et notamment ceux utilisés dans la fabrication des chewing-gums. On peut citer à titre d'exemple les produits commerciaux de la société Wacker : Vinnapass20® et Vinnapass40®.

Le polymère Vinnapass20® comprend 20% en masse de laurate de vinyle de 80% en masse d'acétate de vinyle. Il possède une masse moléculaire moyenne en nombre (Mn) de 240 000 g/mol.

Le polymère Vinnapass40® comprend 40% en masse de laurate de vinyle et 60% en masse d'acétate de vinyle. Il possède une masse moléculaire moyenne en nombre (Mn) de 450 000 g/mol.

Le terme « copolymère à base de styrène » désigne un copolymère, statistique ou à blocs, issu de la polymérisation d'un mélange de monomères comprenant au moins 10%, de préférence au moins 30%, avantageusement au moins 50% et plus avantageusement au moins 70% en masse, de styrène par rapport à la masse totale de monomères.

A titre de copolymère à base de styrène, on peut citer par exemple des copolymères polystyrène-isoprène-styrène (SIS), le mélange de copolymères SIS/SI, des copolymères polystyrène-butadiène-styrène (SBS) ou le mélange SBS/SB, et tout particulièrement les grades autorisés dans la fabrication d'enrobage, de préférence les grades utilisés dans la fabrication de chewing-gums et bubble-gum.

Le terme « acide gras » désigne un acide carboxylique à chaîne aliphatique (c'est-à-dire ne comportant que des atomes de carbone et d'hydrogène), linéaire ou ramifiée, saturée ou insaturée, et comportant typiquement de 2 à 24, de préférence de 6 à 24, avantageusement de 12 à 24 atomes de carbone.

Le terme « alcool gras » désigne un alcool à chaîne aliphatique (c'est-à-dire ne comportant que des atomes de carbone et d'hydrogène), linéaire ou ramifiée, saturée ou insaturée, et comportant typiquement de 2 à 24, de préférence de 6 à 24, avantageusement de 12 à 24 atomes de carbone.

Le terme « copolymère à base d'esters vinyliques d'acides gras » désigne un copolymère, statistique ou à blocs, issu de la polymérisation d'un mélange de monomères comprenant au moins 10%, de préférence au moins 30%, avantageusement au moins 50% et plus avantageusement au moins 70% en masse, d'esters vinyliques d'acides gras par rapport à la masse totale de monomères. A titre d'exemple, on peut citer les copolymères de la société Wacker, Vinnapass20® et Vinnapass40® ainsi que les copolymères décrit dans FR2958120A1.

Le terme « copolymère à base d'acrylates d'alcools gras » désigne un copolymère, statistique ou à blocs, issu de la polymérisation d'un mélange de monomères comprenant au moins 10%, de préférence au moins 30%, avantageusement au moins 50% et plus avantageusement au moins 70% en masse, d'acrylates d'alcools gras par rapport à la masse totale de monomères.

Le terme « copolymère à base de méthacrylates d'alcools gras » désigne un copolymère, statistique ou à blocs, issu de la polymérisation d'un mélange de monomères comprenant au moins 10%, de préférence au moins 30%, avantageusement au moins 50% et plus avantageusement au moins 70% en masse, de méthacrylates d'alcools gras par rapport à la masse totale de monomères.

Le terme « copolymère à base d'éthers d'alcools gras » désigne un copolymère, statistique ou à blocs, issu de la polymérisation d'un mélange de monomères comprenant au moins 10%, de préférence au moins 30%, avantageusement au moins 50% et plus avantageusement au moins 70% en masse, d'éthers d'alcools gras par rapport à la masse totale de monomères.

La composition d'enrobage C1 comprend en outre un plastifiant, de préférence autorisé comme additif alimentaire ou de masse moléculaire élevée (supérieure à 2000 g/mol) afin de limiter ou totalement empêcher sa migration éventuelle, et selon une teneur en poids de 0,1% à 50% par rapport au poids total de la composition d'enrobage C1.

Sans vouloir être lié à une théorie particulière, l'ajout d'un plastifiant dans la composition d'enrobage C1 permet d'améliorer ses propriétés de flexibilité, de souplesse, de plasticité et de malléabilité. Le plastifiant permet également d'améliorer la texture de la composition d'enrobage C1 à chaud lors du procédé d'enrobage de la présente invention.

De préférence, le plastifiant est choisi dans le groupe constitué des esters d'acide gras et de polyols et des esters d'acides gras et d'alcools gras.

Le terme « polyol » ou polyalcool, désigne un composé chimique organique comprenant plusieurs groupes -OH.

A titre de polyol adapté à l'estérification avec les acides gras pour une utilisation comme plastifiant, on peut citer par exemple le glycérol, le sorbitol, le sorbitane, le xylitol, la saccharose, les stérols et les polyphénols végétaux.

A titre de plastifiant du matériau d'enrobage C1 à l'état fondu, on peut également citer la cire de carnauba à l'état fondu, la matière grasse hydrogénée ou non, le tristéarate de sorbitane ou tout autre ester d'acide gras.

La composition d'enrobage C1 comprend en outre un agent de charge, selon une teneur en poids de 0,1% à 60% par rapport au poids total de la composition d'enrobage C1.

De préférence, l'agent de charge est choisi dans le groupe constitué des charges minérales comme par exemple les silicates, les carbonates, les phosphates et les sulfates, des farines d'origine végétale, des particules de bois ou de coquilles de noix micronisées, des produits d'origine animale, des produits de synthèse obtenus à partir de ressources renouvelables, et de leurs mélanges. Avantageusement, l'agent de charge est choisi dans le groupe constitué du talc, du kaolin, du carbonate de calcium, du sulfate de calcium, du chlorure de sodium, et de leurs mélanges.

Sans vouloir être lié à une théorie particulière, l'incorporation d'un agent de charge renforce la structure mécanique de l'enrobage. Ceci permet de réduire l'épaisseur de l'enrobage tout en préservant la bonne tenue aux chocs lors des différentes étapes de fabrication, de conditionnement (par exemple mise sous emballage secondaire ou regroupement de produits pour des petits formats) et de commercialisation du produit. Par ailleurs, cette moindre épaisseur est favorable à une bonne élimination de l'enrobage au moment de la consommation, en augmentant le caractère déchirable de l'enrobage à froid. Pour certaines charges en quantité importante, elles apportent une modification très significative du comportement mécanique des mélanges de polymères, leur conférant des propriétés de malléabilité importantes et recherchées pour les enrobages décrits ici. On peut par exemple citer leur utilisation dans le domaine des gommes à mâcher ou bien des pâtes à modeler.

Selon un mode de réalisation, la composition d'enrobage C1 comprend en outre un pigment, organique ou minéral, de préférence selon une teneur en poids de 0,1% à 5% par rapport au poids total de la composition d'enrobage C1.

L'incorporation d'un pigment dans la composition d'enrobage C1 permet de modifier les propriétés optiques de l'enrobage et de donner une coloration et/ou un aspect esthétique au fromage enrobé qui soit acceptable par le consommateur.

Dans le même temps, le pigment peut également conférer à l'enrobage des propriétés de barrière à la lumière.

Il est à la portée de l'homme du métier de déterminer, parmi les pigments et colorants disponibles et de préférence alimentaires, le pigment adéquat en fonction des propriétés optiques qu'il désire donner à l'enrobage.

De préférence, le pigment est choisi dans le groupe constitué du mica, du quartz, des oxydes métalliques de fer ou de titane, des particules d'aluminium, du lithol Rubin BK et du noir de carbone.

De préférence, le colorant ou pigment est incorporé uniquement dans la couche externe de l'enrobage.

Selon un mode de réalisation, la composition d'enrobage C1 comprend en outre un agent de compatibilisation, de préférence selon une teneur en poids de 0,1% à 10% par rapport au poids total de la composition d'enrobage C1.

L'incorporation d'un agent de compatibilisation permet d'améliorer la stabilité de la composition d'enrobage C1 ou son adhésion à une autre couche, par exemple lorsque celle-ci comprend un agent de charge ou bien lorsque celle-ci est au contact d'une composition d'enrobage C2.

L'agent de compatibilisation est typiquement un composé présentant des propriétés tensioactives (molécule ou polymère) et est de préférence choisi dans le groupe constitué des acides gras hydrogénés à longue chaîne (en C₁₂-C₂₄) et leurs sels (de sodium, de potassium, de calcium ou de magnésium) et des polymères présentant de nombreuses fonctions hydrophiles et hydrophobes, comme par exemple un copolymère issu de la polymérisation d'éthylène ou de propylène avec de l'acide méthacrylique ou ses sels.

A titre d'exemple d'agent de compatibilisation, on peut citer le polymère Surlyn8920® de la société Dupont™, qui est un copolymère d'éthylène et d'acide méthacrylique dans lequel les groupements acides carboxyliques ont été partiellement neutralisés par des ions sodium. Ce polymère possède un indice de viscosité (MFI / 190°C/2, 16 kg) de 0,9 g/10 min mesuré selon la norme ASTM D1238, ainsi qu'une température de fusion de 88°C mesuré par DSC (Analyse Calorimétrique Différentielle) selon la norme ASTM D3418.

Selon un mode de réalisation, la composition d'enrobage C1 comprend en outre un agent de cohésion, de préférence selon une teneur en poids de 0,1% à 5% par rapport au poids total de la composition d'enrobage C1.

L'incorporation d'un agent de cohésion permet d'augmenter les propriétés de cohésion d'un matériau dans le domaine d'utilisation de celui-ci en permettant d'augmenter sa résistance mécanique aux chocs en le rendant moins fragile et moins friable.

De préférence, l'agent de cohésion est choisi dans le groupe constitué du polyacétate de vinyle, du copolymère d'acétate de vinyle et d'éthylène, du copolymère d'éthylène et de méthacrylate de butanol.

Selon un mode de réalisation, la composition d'enrobage C1 comprend en outre un agent antifongique, de préférence selon une teneur en poids de 0,1% à 5% par rapport au poids total de la composition d'enrobage C1.

L'incorporation d'un agent antifongique permet de protéger la surface du fromage enrobé lors de son conditionnement.

Alternativement, l'agent antifongique peut être greffé sur la surface de l'enrobage.

Parmi les agents antifongiques, on peut citer la natamycine, l'acide sorbique et ses sels de potassium, sodium ou calcium, les acides gras et notamment l'acide propanoïque, l'acide benzoique et ses sels, la nisine, la polylisine.

Selon un mode de réalisation, la composition d'enrobage C1 comprend en outre un agent de nucléation, de préférence selon une teneur en poids de 0,1% à 5% par rapport au poids total de la composition d'enrobage C1.

L'incorporation d'un agent de nucléation permet de modifier les propriétés de cristallisation et les propriétés optiques et mécaniques de l'enrobage. Parmi les agents de nucléation, on peut citer le stéarate de zinc associé au 1,2 cyclohexanedicarboxylate de calcium, connu sous le nom commercial de Hyperform® HPN20-E de Milliken, quelques silicates comme le talc et le kaolin, ou encore des polymères de type ionomère Na+ comme par exemple le Surlyn8920® de la société Dupont™.

A titre de composition d'enrobage C1 préférée, on peut citer les mélanges dérivés des gommes de base utilisées dans le domaine des chewing-gums et à base de copolymères SIS, SI, SIS/SI, SBS, SB, ou encore SBS/SB, de charges minérales comme le talc et d'une résine comme par exemple la résine de pin hydrogénée.

La présence de copolymères vinyliques d'acides gras est également privilégiée afin d'apporter un effet plastifiant et/ou de cohésion.

Différentes variantes préférées de composition d'enrobage C1 selon l'invention sont présentées ci-après.

### Variante 1

On utilise une composition à base de gomme de base pour chewing-gum ou bubble-gum contenant une ou plusieurs gommes naturelles comme par exemple les gommes végétales avec par exemple le chicle ou le caoutchouc naturel (Hévéa).

De la même façon, la gomme de base peut contenir une ou plusieurs gommes de synthèse à base de polymères de type élastomère comme par exemple des copolymères à blocs à base de styrène (S), et de butadiène (B) ou isoprène (I). Ces copolymères comportent typiquement deux blocs distincts ou trois blocs distincts ou encore un mélange de copolymères à deux et trois blocs. Ces copolymères peuvent avoir des structures linéaires ou radiales. On peut citer les copolymères SB, SBS, SBS/SB, SI, SIS, ou encore SIS/SI. Préférentiellement dans ces copolymères, le styrène représente de 10 à 50% en poids, plus préférentiellement de 10 à 40% en poids, et plus préférentiellement de 15 à 35% en poids par rapport au poids total du copolymère. Préférentiellement, ces copolymères styréniques présentent des indices de viscosité compris entre 0 et 40 g/10 min (MFI mesuré selon la norme ASTM D 1238, 200°C/5 kg).

D'autres polymères et copolymères utilisés dans le domaine des chewing-gums peuvent également être utilisés dans ces formulations comme par exemple le polyéthylène, le polyisobutylène, le poly(acétate de vinyle), les copolymères d'éthylène et d'acétate de vinyle, les polyoléfines ramifiées ou non, les copolymères d'iso butylène et d'isoprène, les copolymères d'acétate de vinyle et de laurate de vinyle, ainsi que d'autres esters vinyliques d'acides gras.

De préférence, les polyéthylènes ont des masses moléculaires moyennes en nombre (Mn) supérieures à 2000 g/mol, plus préférentiellement supérieures à 10 000 g/mol, plus préférentiellement encore supérieures à 50 000 g/mol, et encore plus préférentiellement supérieures à 100 000 g/mol. Préférentiellement, le polyéthylène est compris dans la composition d'enrobage C1 selon une proportion massique comprise de 0,1 à 70%, avantageusement de 1 à 50%, et par exemple de 1 à 35%. Le polyéthylène est généralement utilisé en mélange avec d'autres polymères hydrophobes au sein de la composition d'enrobage C1.

De préférence, les poly(acétate de vinyle) ou les copolymères d'acétate de vinyle et d'éthylène ont des masses moléculaires moyennes en nombre (Mn) comprises entre 10 000 et 200 000 g/mol, et préférentiellement entre 15 000 et 100 000 g/mol. Préférentiellement, les poly(acétate de vinyle) ou les copolymères d'acétate de vinyle et d'éthylène sont compris dans la composition d'enrobage C1 selon une proportion massique comprise de 0,1 à 70%, avantageusement de 1 à 50%, et par exemple de 1 à 35%. Ces polymères sont généralement utilisés en mélange avec d'autres polymères hydrophobes au sein de la composition d'enrobage C1.

De préférence, les copolymères d'ester vinyliques d'acides gras sont fabriqués à partir d'esters vinyliques d'acides gras dont les longueurs de chaîne des acides gras sont comprises de 2 à 22 carbones. Selon un mode de réalisation, les copolymères sont de type statistique, en bloc ou greffés. Préférentiellement, ces copolymères ont une masse moléculaire moyenne en nombre (Mn) comprise entre 10 000 g/mol et 500 000 g/mol, avantageusement entre 10 000 et 250 000g/mol, et par exemple entre 15 000 et 125 000 g/mol.

Des agents structurant peuvent également entrer dans la composition comme par exemple les résines terpéniques, les dérivés de résines végétales (colophane, résine de pin), les cires végétales, animales ou d'origine pétrolière comme par exemple les cires microcristallines, les cires de Fischer-Tropsch, les cires de polyéthylène, de carnauba, ou d'abeille.

Des agents de charge peuvent également être incorporés à la composition de ces gommes de base comme par exemple les silicates de magnésium (talc) ou encore les carbonates de calcium ou de magnésium.

A titre d'exemple, des gommes de base comme CHICA BBT® ou CAROL BBT® de GumBase & Co™ peuvent être utilisées pour réaliser ladite composition d'enrobage C1. Ces gommes de base pour chewing-gum contiennent un copolymère de styrène et butadiène, et du talc à hauteur de 37% en poids. La température de ramollissement de Vicat, mesurée selon la norme ASTM D1525, est de 78°C pour CHICA BBT®, et 67°C pour CAROL BBT®.

Avantageusement, la quantité de talc totale (initialement présente et additivée) représente 30 à 70% de la masse totale de ladite composition d'enrobage, plus préférentiellement de 35 à 60% et plus préférentiellement encore de 40 à 55% du total.

Ce type de matériaux à chaud (typiquement entre 80°C et 140°C) peut être aisément coulé sur une surface plane ou un rouleau pour former un film d'enrobage, selon une des variantes décrite ci-dessus.

Après un premier refroidissement, le film est figé mais reste malléable pour permettre un scellage par pression.

A froid, c'est-à-dire à la température de consommation du produit fromager enrobé, l'enrobage ainsi obtenu est malléable et déchirable, afin de permettre l'ouverture de l'enrobage et l'accès au produit.

Des exemples de formulations sont donnés dans le tableau suivant :

| | | | Viscosité* (Pa.s) | | | | | |
|---|---|---|---|---|---|---|---|---|
| Mélange | Gomme de base (% massique) | Talc ajouté/teneur totale en talc (% massique) | 120°C | 110°C | 100°C | 90 °C | 80°C | 70 °C |
| 1 | CHICA (100) | 0/37 | 16.3 | 21.1 | 26.9 | 41.9 | 59.1 | Nm |
| 2 | CHICA (91) | 9/42,7 | 24.4 | 35.5 | 56.5 | Nm | Nm | Nm |
| 3 | CHICA (80) | 20/49,6 | 30.7 | 31.6 | Nm | Nm | Nm | / |
| 4 | CAROL (100) | 0/38 | 35.2 | 39.7 | 38.3 | 39.8 | 44.1 | 58.0 |
| 5 | CAROL (91) | 9/43,6 | 34.4 | 36.5 | Nm | Nm | / | / |
| 6 | CAROL (80) | 20/50,4 | Nm | Nm | / | / | / | / |

| | | | | | | | | |
|---|---|---|---|---|---|---|---|---|
| Nm : non mesurable du fait d'une mauvaise adhésion entre les plateaux et le film visqueux. / : non déterminé * : mesurée en cisaillement sur Physica MCR301 Anton Paar avec géométrie plan striée PP 25/P2 (diamètre : 24,962mm - entrefer 0,256mm) à différentes températures et avec une rampe de cisaillement entre 1000s⁻¹ et 10s⁻¹. | | | | | | | | |

### Variante 2

A titre de composition d'enrobage C1, on peut utiliser une composition à base de cires à haut point de fusion, de façon à ce que la température de conditionnement soit inférieure de 2 à 30°C à la température de fusion desdites cires. A une telle température, lesdites cires sont aisément malléables et peuvent donc être scellées facilement entre deux rouleaux de demi-moules, tel que décrit ci-dessus. On peut ajouter à cette formulation un polymère de type polyoléfine ayant une température de cristallisation dans la même gamme de température. Plus particulièrement, on pourra envisager une polyoléfine ramifiée, telle que VYBAR® 103 ou VYBAR® 206 de Baker Hughes™. Ces polymères sont des polymères hyper ramifiés obtenus par polymérisation de mélange d'alpha-oléfines et sont respectivement de masse moléculaire moyenne en nombre (Mn) de 4400 g/mol et 2600 g/mol. Leurs températures de fusion sont respectivement de 74°C et 54°C.

Parmi les cires ayant des températures de fusion adaptée, on peut citer des cires Fischer Tropsch, des cires microcristallines à haut point de fusion, de la cire de carnauba, de la cire de polyéthylène, de la cire de polypropylène, de la matière grasse hydrogénée à haut point de fusion. Avantageusement, la température de fusion de la cire est supérieure à 45°C, plus avantageusement supérieure à 60°C, plus avantageusement supérieure à 70°C et plus avantageusement encore supérieure à 80°C.

Des additifs permettant la prise en masse ou en gel peuvent également y être ajoutés, comme par exemple l'acide stéarique ou ses sels, les esters de polyols cristallins (mono, di et tri stéarate de sorbitane, mono, di et tri stéarate de glycérol), les stérols et esters de stérols végétaux.

| Composition d'enrobage | Huile Olive | VYBAR® 260 | Talc 8218 Luzenac |
|---|---|---|---|
| 7 | 40,5% | 10,0 % | 49,5% |

Des agents de charges peuvent également être ajoutés afin de modifier les propriétés thermomécaniques des cires, comme cela a été démontré avec une formulation de cire de polypropylène (masse moléculaire en nombre Mn=5000 g/mol) contenant du carbonate de calcium et du talc.

| Composition d'enrobage | Tc (°C) | T_{fmax} (°C) | ΔH (J/g) |
|---|---|---|---|
| 8 : 100%Polypropylène (PP) | 117.4 | 158.6 | 101.4 |
| 9: 77%PP + 15%Talc8218+3%TiO₂+5%CaCO₃ | 112.2 | 129.1 | 34.0 |
| 10 : 82%PP + 10%Talc8218+3%TiO₂+5%CaCO₃ | 126.8 | 152.2 | 86.1 |
| 11 : 84%PP + 8%Talc8218+3%TiO₂+5%CaCO₃ | 124.3 | 148.0 | 74.6 |
| 12 : 84%PP + 10%Talc8218+3%TiO₂+3%CaCO₃ | 128.3 | 152.6 | 84.0 |
| 13 : 86%PP + 8%Talc8218+3%TiO₂+3%CaCO₃ | 127.5 | 152.4 | 86.6 |

avec Tc(°C) la température de cristallisation observée par DSC (TA Instrument 2920CE) en refroidissement à 4°C depuis une température initiale de 200°C pendant 2 minutes et T_{fmax}(°C) la température de fusion du pic de fusion d'une même composition le plus élevé en température.

Parmi les charges, on peut citer le carbonate de calcium (et autres carbonates), les silicates dont magnésium (talc) et aluminium (kaolin) et autres minéraux, les farines de bois ou coquilles de noix micronisées.

Ces compositions 9 à 13 conduisent à des comportements mécaniques tels que l'enrobage est fragile et donc cassant entre les doigts d'une même main, ce qui permet de s'affranchir d'un système d'ouverture.

### Variante 3

A titre de composition d'enrobage C1, on peut aussi utiliser des huiles végétales désodorisées et blanchies pour former une couche d'enrobage hydrophobe.

Les huiles végétales sont par exemple l'huile de soja, de tournesol, de colza, d'olive, de palme, d'arachide, de coco. D'autres huiles pourront également être utilisées comme l'huile de noix, de noisettes, de lin, de coton, de mais. Les huiles ayant peu d'insaturations seront préférées afin d'éviter les risques d'oxydation.

Ce film peut contenir des additifs amorphes ou cristallins pour permettre la gélification de la couche d'enrobage, tels que décrits ci-dessous.

Des polymères sont utilisés pour permettre la gélification des huiles, mais également leur conférer les propriétés filmogènes. Des polymères ayant des transitions thermiques (vitreuse et fusion principalement) supérieures à 70°C sont préférés. On peut citer par exemple les copolymères blocs à base de styrène, d'isoprène, de butadiène (1,3 ou 1,4), ou encore les copolymères d'éthylène et de propylène, le polybutylène ou polybutène.

Le gel peut également être formé à partir de dérivés d'acides gras, comme les esters de stérols végétaux, les mono, di et triesters de sorbitane, les mono, di et tri esters de glycérol, les mono et poly esters de saccharose, sucrose, sorbitol, polyglycérol, les esters de résine terpéniques, les esters de colophane, les esters et éthers de cellulose, les esters et éthers d'amidon ou d'hémicellulose, les esters de stérols. Préférentiellement ces substances sont amorphes et possèdent des propriétés tensioactives.

Des agents de charges peuvent être ajoutés comme le carbonate de calcium (et autres carbonates), les silicates dont magnésium (talc) et aluminium (kaolin), les coquilles de noix micronisées. L'utilisation de ces charges sera préférée afin de supprimer l'apparence huileuse/grasse de ce type de composition (voir l'exemple de composition 7).

Des exemples de composition d'enrobage sont donnés ci-après :

| Composition d'enrobage | Huile d'olive (%) | Polymère SIS (%) | Mono Stéarate Sorbitane (%) |
|---|---|---|---|
| 14 | 80 | 0 | 20 |
| 15 | 85 | 15 (VECTOR® 4411) | 0 |
| 16 | 85 | 15 (VECTOR® 4114) | 0 |
| 17 | 90 | 10 (VECTOR® 4411 et 4114) | 0 |

### Variante 4

L'utilisation d'agents de charge pour donner à la composition d'enrobage C1 le comportement d'une cire, c'est-à-dire son caractère malléable et déchirable, est préférée avec des charges lipophiles préférentiellement. Le talc et le kaolin ont des capacités d'absorption d'huile de plus de 40% à 70% selon le grade. De plus, ces substances sont inertes chimiquement, de grade alimentaire, peu sujettes à la migration et ne sont pas susceptibles d'apporter de mauvais goût ou d'odeur au produit fromager enrobé.

Lorsque ces charges sont ajoutées à un niveau de concentration suffisamment élevé, le comportement de la composition d'enrobage s'en trouve significativement modifié: elle devient souple, caoutchouteuse, pâteuse. De plus, la présence de talc par exemple, permet de rendre le matériau peu gras car il retient l'huile (solubilité élevée comme on peut le voir au-dessus).

Selon des modes de réalisation, on utilise des compositions à base de polymères totalement ou partiellement biosourcés. On utilisera en particulier des polyesters à chaînes latérales alkyles sous forme d'homopolymères, de copolymères ou de mélanges de ces polymères, notamment les PHA ou poly(hydroxy alkanoate), ou les polyesters vinyliques d'acides gras, ou bien encore les polyacrylates d'alcools gras.

### Couche interne et composition d'enrobage C2

Dans le cas où l'enrobage comprend en outre au moins une couche interne, la composition d'enrobage C2 qui constitue ladite couche interne est de préférence une composition d'enrobage aqueuse. Ladite couche interne est de préférence au contact du matériau fromager.

Par « composition d'enrobage aqueuse », on entend une composition, généralement sous forme gélifiée, comprenant au moins 10%, de préférence au moins 20%, préférentiellement au moins 30% en poids d'eau par rapport au poids de la dite composition. De telles compositions sont décrites ci-après.

Sans vouloir être lié à une théorie particulière, la présence d'une telle couche interne entre la couche externe, de préférence imperméable à l'eau, et le matériau fromager permet d'éviter la migration de composés hydrophobes de la couche externe vers le matériau fromager.

Selon un mode de réalisation, la composition d'enrobage C2 est une composition d'enrobage aqueuse comprenant au moins un polysaccharide ou un dérivé de polysaccharide.

Typiquement, le polysaccharide ou un dérivé de polysaccharide (ou leur mélange) est présent dans la composition d'enrobage C2 selon une teneur en poids d'au moins 10%, de préférence d'au moins 30%, avantageusement d'au moins 40%, plus avantageusement d'au moins 50%, par rapport au poids total de la composition d'enrobage C2.

Typiquement, la composition d'enrobage C2 comprend une teneur en eau de 30% à 80%, de préférence de 40% à 70%, préférentiellement de 50% à 60%, en poids par rapport au poids total de la composition d'enrobage C2.

Par polymère « dérivé de polysaccharide », on entend par exemple un dérivé acétylé, un éther, un dérivé carboxy méthylé ou un dérivé hydroxypropyl méthylé de polysaccharide.

A titre de polysaccharide ou de dérivé de polysaccharide, on peut citer par exemple l'amidon et ses dérivés, la cellulose et ses dérivés, le cellophane, l'alginate, la pectate, la xanthane, la gellane, le carraghénane, la pulullane, la chitosane, la chitine et les gommes hydrophiles.

A titre de dérivé d'amidon, on peut citer l'amidon hydroxypropylé et l'amidon hydrophobé.

A titre de dérivé de cellulose, on peut citer l'hydroxypropyl méthyl cellulose, l'hydroxypropyl cellulose, la méthyl cellulose, l'éthyl cellulose, la cellophane ou cellulose régénérée.

A titre de dérivé de gommes hydrophiles, on peut citer la gomme guar ou la gomme arabique.

Selon un mode de réalisation particulier, typiquement lorsque l'enrobage contient un alginate ou une gellane, l'enrobage est gélifié après la mise en forme du produit fromager enrobé par l'action de cations divalents, tels que des cations calcium, magnésium ou zinc. Le matériau fromager peut être la source desdits cations calcium.

Selon un mode de réalisation, la composition d'enrobage C1 comprend en outre un agent de compatibilisation, de préférence selon une teneur en poids de 0,1% à 10%, de préférence de 0,1% à 5%, par rapport au poids total de la composition d'enrobage C1.

L'incorporation d'un agent de compatibilisation permet d'améliorer la cohésion entre la couche d'enrobage externe et la couche d'enrobage interne et ainsi d'améliorer la tenue de l'enrobage.

L'agent de compatibilisation est typiquement un composé présentant des propriétés tensioactives (molécule ou polymère) et est de préférence choisi dans le groupe constitué des acides gras hydrogénés à longue chaîne (en C₁₂-C₂₄) et leurs sels (de sodium, de potassium, de calcium ou de magnésium) et des polymères présentant de nombreuses fonctions hydrophiles et hydrophobes, comme par exemple un copolymère issu de la polymérisation d'éthylène ou de propylène avec de l'acide méthacrylique.

L'agent de compatibilisation peut être uniquement incorporé dans la couche externe ou dans la couche interne, selon son affinité pour l'un ou l'autre des couches.

Ainsi, dans le cas d'une couche interne comprenant un polymère hydrophile alginate ou gellane de calcium, celle-ci ne comportera pas d'agent de compatibilisation, celui-ci étant présent dans la couche externe sous forme d'un acide gras à longue chaîne ou bien par exemple un copolymère issu de la polymérisation d'éthylène ou de propylène avec de l'acide méthacrylique ou ses sels. A titre d'exemple d'un tel agent de compatibilisation, on peut citer le Surlyn8920® de la société Dupont™.

Avantageusement, des compositions spécifiques d'enrobage hydrophobes et hydrophiles permettent une bonne adhésion entre les deux couches malgré leurs caractères hydrophiles et hydrophobes opposés.

Des systèmes adaptés pour cette bonne adhésion sont, par exemple :
- une couche hydrophile interne à base d'alginate ou de gellane, réticulée par des sels de calcium comme par exemple le chlorure de calcium, l'acétate de calcium ou bien encore le phosphate de calcium, et
- une couche externe imperméable à l'humidité, comme par exemple une gomme de base contenant des acides gras longs ou un polymère amphiphile anionique, comme par exemple un copolymère d'éthylène et d'acide acrylique.

Avantageusement, une très fine couche d'un polymère ayant des propriétés intermédiaires des couches interne et externe pourra également être utilisée, entre lesdites couches, comme par exemple un terpolymère d'éthylène, d'acétate de vinyle et d'acide maléique ou fumarique.

La présente demande a également pour objet l'utilisation d'une composition d'enrobage C1 telle que définie ci-dessus pour la préparation d'un produit fromager enrobé tel que défini ci-dessus.

### Exemple de préparation d'un produit fromager enrobé comprenant une couche d'enrobage C1 et une couche d'enrobage C2

A titre d'exemple d'enrobage avec deux couches de composition C1 et C2, on peut citer la mise en œuvre suivante.

La couche interne, au contact du produit, est constituée d'une composition C2 à base de gellane acétylée et d'eau, dont la température de gélification est de 80°C. L'acide béhénique, dont la température de fusion est de 80°C est ajouté à cette composition C2 de façon à représenter 5% du poids total.

La couche externe de composition C1 est constituée de gomme de base CHICA BBT additivée de talc, de façon à ce que le taux de talc massique total soit de 50%.

La composition C1 est chauffée et coulée sur deux cylindres pour former deux films de composition C1, puis une solution aqueuse de phosphate de calcium est pulvérisée à la surface desdits deux films. De cette façon, peu d'eau résiduelle reste présente à la surface des films du fait de la température des films et de la faible quantité pulvérisée. La seconde composition C2 est ensuite coulée sur la surface des films. La présence des fonctions acides carboxyliques présentes à la fois dans les couches interne et externe, associées aux ions calcium du phosphate de calcium, permet de créer des ponts ioniques forts entre les deux couches.

Une préparation fromagère de type fromage frais fondu (Kiri®), fromage fondu (Vache qui Rit®, Apéricube®) ou fromage frais (Boursin®) est ensuite injectée entre les deux films amenés au niveau de la buse d'injection et entre les moules rotatifs, et l'ensemble est mis en forme par moulage et scellage.

Le refroidissement du produit fromager enrobé ainsi obtenu en dessous de 65°C permet de gélifier les différentes couches de composition C1 et C2, dont les propriétés d'adhésion sont assurées par les ions calcium pulvérisés entre les deux compositions puis par ceux apportés par le produit laitier par la suite (par transfert au travers de la couche de composition C2).

### Produit fromager enrobé

L'invention a également pour objet un produit fromager enrobé, comprenant un cœur comprenant un matériau fromager et un enrobage malléable à température de conservation dudit produit fromager enrobé et étanche à l'humidité et aux microorganismes, entourant totalement le cœur à sa périphérie, ledit matériau fromager étant un fromage fondu, un fromage frais, un fromage frais fondu ou un fromage obtenu par un procédé de recombinaison.

Ce produit fromager enrobé présente les avantages du produit fromager enrobé susceptible d'être obtenu par le procédé de l'invention.

L'enrobage dudit produit fromager enrobé comprend typiquement un film de composition d'enrobage C1 telle que définie ci-dessus, situé au contact de l'extérieur.

Selon une variante, ledit enrobage comprend en outre un film de composition d'enrobage C2 telle que définie ci-dessus, situé au contact du cœur.

De préférence, le matériau fromager est un fromage fondu, un fromage frais ou un fromage frais fondu.

L'enrobage comprend un agent de charge tel que défini ci-dessus.

## Revendications

1. Procédé de préparation d'un produit fromager enrobé, ledit procédé comprenant les étapes de :
- injection d'un matériau fromager à l'état visqueux entre deux films d'enrobage et au contact desdits films, lesdits films étant malléables à la température de conservation dudit produit fromager enrobé et comprenant chacun, en face externe, au moins une couche externe constituée d'une composition d'enrobage C1 à l'état gélifié, ladite composition d'enrobage comprenant :
- au moins un polymère hydrophobe, ou un mélange de polymères hydrophobes selon une teneur en poids d'au moins 5 % par rapport au poids total de la composition d'enrobage C1, le polymère hydrophobe étant choisi dans le groupe constitué des polyoléfines, des copolymères à base d'acétate de vinyle, des copolymères à base de styrène, des copolymères à base d'esters vinyliques d'acides gras, des copolymères à base d'acrylates d'alcools gras, des copolymères à base de méthacrylates d'alcools gras, des copolymères à base d'éthers d'alcools gras, des gommes hydrophobes, des gommes de base, et de leurs mélanges, et des polymères biosourcés,
- un plastifiant selon une teneur en poids de 0,1% à 50% par rapport au poids total de la composition d'enrobage C1, et
- un agent de charge selon une teneur en poids de 0,1% à 60% par rapport au poids total de la composition d'enrobage C1,
a) les deux films d'enrobage étant séparés avant l'injection du matériau fromager,
et dès l'injection réalisée, suit
b) la mise en forme d'au moins un produit fromager enrobé, par pression sur la face externe de chacun desdits deux films d'enrobage, de manière à obtenir un produit fromager enrobé comprenant un cœur comprenant ledit matériau fromager et un enrobage malléable à la température de conservation dudit produit fromager enrobé et étanche à l'humidité et aux microorganismes, entourant totalement le cœur à sa périphérie, ledit enrobage étant constitué par l'assemblage par pression desdits deux films d'enrobage et comprenant au moins une couche externe constituée de ladite composition d'enrobage C1,
dans lequel l'étape de mise en forme est réalisée en introduisant l'ensemble des deux films d'enrobage et du matériau fromager entre deux rouleaux rotatifs comportant des demi-empreintes complémentaires imprimant la forme souhaitée aux produits fromagers enrobés, la zone de scellage étant intégrée dans la surface de l'enrobage. '

2. Procédé selon la revendication 1, dans lequel lesdits films comprennent en outre chacun, en face interne, au moins une couche interne constituée d'une composition d'enrobage C2 à l'état gélifié, différente de ladite composition d'enrobage C1, et dans lequel l'enrobage obtenu à l'issue de l'étape b) de mise en forme comprend au moins une couche externe constituée de ladite composition d'enrobage C1, et au moins une couche interne, différente de ladite au moins une couche externe, constituée d'une composition d'enrobage C2, située entre le cœur et ladite au moins une couche externe.

3. Procédé selon la revendication 1, comprenant en outre, avant l'étape a) d'injection, une étape de formation des deux films d'enrobage comprenant la fourniture d'au moins ladite composition d'enrobage C1 à l'état visqueux.

4. Procédé selon la revendication 2, comprenant en outre, avant l'étape a) d'injection, une étape de formation des deux films d'enrobage comprenant la fourniture d'au moins ladite composition d'enrobage C1 à l'état visqueux et la fourniture d'au moins ladite composition d'enrobage C2 à l'état visqueux.

5. Procédé selon l'une quelconque des revendications 3 ou 4, dans lequel la fourniture de ladite composition d'enrobage C1 et/ou C2 à l'état visqueux est suivie d'une étape de refroidissement apte à gélifier ladite composition d'enrobage C1 et/ou C2.

6. Procédé selon l'une quelconque des revendications 1 à 5, dans lequel le matériau fromager est un fromage fondu, un fromage frais, un fromage frais fondu ou un fromage obtenu par un procédé de recombinaison.

7. Procédé selon la revendication 1, dans lequel l'agent de charge est une charge minérale, typiquement choisi dans le groupe constitué du talc, du kaolin, du carbonate de calcium, du sulfate de calcium, du chlorure de sodium, et de leurs mélanges.

8. Procédé selon l'une quelconque des revendications 2 à 7, dans lequel ladite composition d'enrobage C2 est une composition d'enrobage aqueuse comprenant au moins un polysaccharide ou un dérivé de polysaccharide.

9. Procédé selon la revendication 8, dans lequel le polysaccharide ou dérivé de polysaccharide est choisi dans le groupe constitué de l'amidon et ses dérivés, la cellulose et ses dérivés, le cellophane, l'alginate, la pectate, la xanthane, la gellane, le carraghénane, la pulullane, la chitosane, la chitine et les gommes hydrophiles.

10. Produit fromager enrobé susceptible d'être obtenu selon le procédé tel que défini à l'une quelconque des revendications 1 à 9,
dans lequel le produit fromager enrobé comprend un matériau fromager à l'état visqueux et un enrobage malléable à la température de conservation dudit produit fromager enrobé et étanche à l'humidité et aux microorganismes entourant totalement le cœur à sa périphérie,
dans lequel ledit enrobage est formé par deux films d'enrobage, lesdits films étant malléables à la température de conservation dudit produit fromager enrobé et comprenant chacun, en face externe, au moins une couche externe constituée d'une composition d'enrobage C1 à l'état gélifié,
ladite composition d'enrobage comprenant :
- au moins un polymère hydrophobe, ou un mélange de polymères hydrophobes selon une teneur en poids d'au moins 5 % par rapport au poids total de la composition d'enrobage C1, le polymère hydrophobe étant choisi dans le groupe constitué des polyoléfines, des copolymères à base d'acétate de vinyle, des copolymères à base de styrène, des copolymères à base d'esters vinyliques d'acides gras, des copolymères à base d'acrylates d'alcools gras, des copolymères à base de méthacrylates d'alcools gras, des copolymères à base d'éthers d'alcools gras, des gommes hydrophobes, des gommes de base, et de leurs mélanges, et des polymères biosourcés,
- un plastifiant selon une teneur en poids de 0,1% à 50% par rapport au poids total de la composition d'enrobage C1, et
- un agent de charge selon une teneur en poids de 0,1% à 60% par rapport au poids total de la composition d'enrobage C1,
et dans lequel la zone de scellage est intégrée dans la surface de l'enrobage.

11. Produit fromager enrobé, comprenant un cœur comprenant un matériau fromager et un enrobage malléable à la température de conservation dudit produit fromager enrobé et étanche à l'humidité et aux microorganismes, entourant totalement le cœur à sa périphérie, ledit matériau fromager étant un fromage fondu, un fromage frais, un fromage frais fondu ou un fromage obtenu par un procédé de recombinaison, dans lequel la zone de scellage est intégrée dans la surface de l'enrobage, , dans lequel l'enrobage comprend au moins un polymère hydrophobe, ou un mélange de polymères hydrophobes selon une teneur en poids d'au moins 5 % par rapport au poids total de la composition d'enrobage C1, le polymère hydrophobe étant choisi dans le groupe constitué des polyoléfines, des copolymères à base d'acétate de vinyle, des copolymères à base de styrène, des copolymères à base d'esters vinyliques d'acides gras, des copolymères à base d'acrylates d'alcools gras, des copolymères à base de méthacrylates d'alcools gras, des copolymères à base d'éthers d'alcools gras, des gommes hydrophobes, des gommes de base, et de leurs mélanges, et des polymères biosourcés,
un plastifiant selon une teneur en poids de 0,1% à 50% par rapport au poids total de la composition d'enrobage C1, et
un agent de charge selon une teneur en poids de 0,1% à 60% par rapport au poids total de la composition d'enrobage C1.

## Patentansprüche

1. Verfahren zum Herstellen eines ummantelten Käseprodukts, wobei das Verfahren aufweist die Schritte des:
- Injizierens eines Käsematerials in viskosem Zustand zwischen zwei Ummantelungsfilme und in Berührung mit den Filmen, wobei die Filme bei der Aufbewahrungstemperatur des ummantelten Käseprodukts formbar sind und jeder an der Außenfläche mindestens eine äußere Schicht, welche aus einer Ummantelungszusammensetzung C1 im Gelzustand gebildet ist, aufweisen, wobei die Ummantelungszusammensetzung aufweist:
- mindestens ein hydrophobes Polymer oder eine Mischung von hydrophoben Polymeren gemäß einem Gewichtsanteil von mindestens 5% bezogen auf das Gesamtgewicht der Ummantelungszusammensetzung C1, wobei das hydrophobe Polymer aus der Gruppe, welche durch Polyolefine, Copolymere auf Vinylacetatbasis, Copolymere auf Styrolbasis, Copolymere auf Basis von Vinylestern von Fettsäuren, Copolymere auf Basis von Acrylaten von Fettalkoholen, Copolymere auf Basis von Methacrylaten von Fettalkoholen, Copolymere auf Basis von Ethern von Fettalkoholen, hydrophobe Gummis, Gummigrundmassen und Mischungen daraus und biobasierte Polymere gebildet ist, ausgewählt ist,
- einem Plastifiziermittel gemäß einem Gewichtsanteil von 0,1% bis 50% bezogen auf das Gesamtgewicht der Ummantelungszusammensetzung C1, und
- einem Füllstoff gemäß einem Gewichtsanteil von 0,1% bis 60% bezogen auf das Gesamtgewicht der Ummantelungszusammensetzung C1,
a) wobei die zwei Ummantelungsfilme vor dem Injizieren des Käsematerials getrennt werden,
und auf die umgesetzte Injektion folgt
b) das Formen von mindestens einem ummantelten Käseprodukt durch Druck auf die Außenseite jeder der beiden Ummantelungsfilme derart, dass ein ummanteltes Käseprodukt erlangt wird, welches aufweist einen Kern, welcher das Käsematerial aufweist, und eine bei der Aufbewahrungstemperatur des ummantelten Käseprodukts formbare und gegen Feuchtigkeit und Mikroorganismen versiegelte Ummantelung, welche den Kern an seinem Umfang vollständig umgibt, wobei die Ummantelung gebildet wird durch Zusammensetzen der zwei Ummantelungsfilme mittels Druck und mindestens eine äußere Schicht aufweist, welche aus der Ummantelungszusammensetzung C1 gebildet ist,
wobei der Schritt des Formens umgesetzt wird durch Einbringen der Anordnung aus den zwei Ummantelungsfilmen und dem Käsematerial zwischen zwei rotierende Walzen, welche komplementäre Halb-Abdruckformen aufweisen, welche die gewünschte Form auf das ummantelte Käseprodukt prägen, wobei der Versiegelungsbereich in die Fläche der Ummantelung integriert wird.

2. Verfahren gemäß dem Anspruch 1, wobei die Filme ferner jeweils auf einer inneren Fläche mindestens eine innere Schicht aufweisen, welche aus einer Ummantelungszusammensetzung C2 im Gelzustand, welche von der Ummantelungszusammensetzung C1 verschieden ist, gebildet ist, und wobei die Ummantelung, welche am Ende vom Schritt b) des Formens erlangt wird, mindestens eine durch die Ummantelungszusammensetzung C1 gebildete äußere Schicht und mindestens eine innere Schicht, welche von der mindestens einen äußeren Schicht verschieden ist, aus einer Ummantelungszusammensetzung C2 gebildet ist und zwischen dem Kern und der mindestens einen äußeren Schicht angeordnet ist, aufweist.

3. Verfahren gemäß dem Anspruch 1, ferner aufweisend, vor dem Schritt a) des Injizierens, einen Schritt des Ausbildens der zwei Ummantelungsfilme, welcher das Bereitstellen von mindestens der Ummantelungszusammensetzung C1 im viskosen Zustand aufweist.

4. Verfahren gemäß dem Anspruch 2, ferner aufweisend, vor dem Schritt a) des Injizierens, einen Schritt des Ausbildens der zwei Ummantelungsfilme, welcher das Bereitstellen von mindestens der Ummantelungszusammensetzung C1 im viskosen Zustand und das Bereitstellen von mindestens der Ummantelungszusammensetzung C2 im viskosen Zustand.

5. Verfahren gemäß irgendeinem der Ansprüche 3 oder 4, wobei sich an das Bereitstellen der Ummantelungszusammensetzung C1 und/oder C2 anschließt ein Schritt des Abkühlens, welcher dazu eingerichtet ist, die Ummantelungszusammensetzung C1 und/oder C2 zu gelieren.

6. Verfahren gemäß irgendeinem der Ansprüche 1 bis 5, wobei das Käsematerial ein Schmelzkäse, ein Frischkäse, ein Schmelz-Frischkäse oder ein Käse, welcher durch ein Rekombinationsverfahren erlangt wird, ist.

7. Verfahren gemäß dem Anspruch 1, wobei der Füllstoff eine mineralische Füllung ist, üblicherweise aus der Gruppe, welche durch Talkum, Kaolin, Calciumcarbonat, Calciumsulfat, Natriumchlorid und Mischungen daraus gebildet ist, ausgewählt ist.

8. Verfahren gemäß irgendeinem der Ansprüche 2 bis 7, wobei die Ummantelungszusammensetzung C2 eine wässrige Ummantelungszusammensetzung ist, welche mindestens ein Polysaccharid oder ein Derivat von Polysaccharid aufweist.

9. Verfahren gemäß Anspruch 8, wobei das Polysaccharid oder das Derivat von Polysaccharid aus der Gruppe, welche durch Stärke und deren Derivate, Cellulose und deren Derivate, Zellophan, Alginat, Pektat, Xanthan, Pullulan, Gellan, Carrageen, Chitosan, Chitin und hydrophiles Gummi gebildet ist, ausgewählt ist.

10. Ummanteltes Käseprodukt, welches gemäß dem Verfahren wie in irgendeinem der Ansprüche 1 bis 9 definiert erhältlich ist,
wobei das ummantelte Käseprodukt ein Käsematerial in viskosem Zustand und eine bei der Aufbewahrungstemperatur des ummantelten Käseprodukts formbare und gegen Feuchtigkeit und Mikroorganismen versiegelte Ummantelung, welche den Kern an seinem Umfang vollständig umgibt, aufweist
wobei die Ummantelung durch zwei Ummantelungsfilme gebildet ist, wobei die Filme bei der Aufbewahrungstemperatur des ummantelten Käseprodukts formbar sind und jeder an der Außenfläche mindestens eine äußere Schicht, welche aus einer Ummantelungszusammensetzung C1 im Gelzustand gebildet ist, aufweisen,
wobei die Ummantelungszusammensetzung aufweist:
- mindestens ein hydrophobes Polymer oder eine Mischung von hydrophoben Polymeren gemäß einem Gewichtsanteil von mindestens 5% bezogen auf das Gesamtgewicht der Ummantelungszusammensetzung C1, wobei das hydrophobe Polymer aus der Gruppe, welche durch Polyolefine, Copolymere auf Vinylacetatbasis, Copolymere auf Styrolbasis, Copolymere auf Basis von Vinylestern von Fettsäuren, Copolymere auf Basis von Acrylaten von Fettalkoholen, Copolymere auf Basis von Methacrylaten von Fettalkoholen, Copolymere auf Basis von Ethern von Fettalkoholen, hydrophobe Gummis, Gummigrundmassen und Mischungen daraus und biobasierte Polymere gebildet ist, ausgewählt ist,
- einem Plastifiziermittel gemäß einem Gewichtsanteil von 0,1% bis 50% bezogen auf das Gesamtgewicht der Ummantelungszusammensetzung C1, und
- einem Füllstoff gemäß einem Gewichtsanteil von 0,1% bis 60% bezogen auf das Gesamtgewicht der Ummantelungszusammensetzung C1,
und wobei der Versiegelungsbereich in die Fläche der Ummantelung integriert ist.

11. Ummanteltes Käseprodukt, aufweisend einen Kern, welcher ein Käsematerial aufweist, und eine bei der Aufbewahrungstemperatur des ummantelten Käseprodukts formbare und gegen Feuchtigkeit und Mikroorganismen versiegelte Ummantelung, welche den Kern an seinem Umfang vollständig umgibt, wobei das Käsematerial ein Schmelzkäse, ein Frischkäse, ein Schmelz-Frischkäse oder ein Käse, welcher durch ein Rekombinationsverfahren erlangt wird, ist, wobei der Versiegelungsbereich in die Fläche der Ummantelung integriert ist, wobei die Ummantelung aufweist mindestens ein hydrophobes Polymer oder eine Mischung von hydrophoben Polymeren gemäß einem Gewichtsanteil von mindestens 5% bezogen auf das Gesamtgewicht der Ummantelungszusammensetzung C1, wobei das hydrophobe Polymer aus der Gruppe, welche durch Polyolefine, Copolymere auf Vinylacetatbasis, Copolymere auf Styrolbasis, Copolymere auf Basis von Vinylestern von Fettsäuren, Copolymere auf Basis von Acrylaten von Fettalkoholen, Copolymere auf Basis von Methacrylaten von Fettalkoholen, Copolymere auf Basis von Ethern von Fettalkoholen, hydrophobe Gummis, Gummigrundmassen und Mischungen daraus und biobasierte Polymere gebildet ist, ausgewählt ist,
ein Plastifiziermittel gemäß einem Gewichtsanteil von 0,1% bis 50% bezogen auf das Gesamtgewicht der Ummantelungszusammensetzung C1, und
einen Füllstoff gemäß einem Gewichtsanteil von 0,1% bis 60% bezogen auf das Gesamtgewicht der Ummantelungszusammensetzung C1.

## Claims

1. Method for preparing a coated cheese product, the said method comprising the steps of:
- injection of a cheese material in the viscous state between two coating films in contact with the said films, wherein the said films are malleable at the storage temperature of the said coated cheese product, and wherein each comprises, on the outer face, at least one external layer consisting of a coating composition C1 in the gelled state, the said coating composition comprising:
- at least one hydrophobic polymer, or a mixture of hydrophobic polymers, wherein the weight of the at least one hydrophobic polymer or the mixture of hydrophobic polymers is at least 5% with respect to the total weight of the coating composition C1, the hydrophobic polymer being selected from the group consisting of polyolefin copolymers based on vinyl acetate, copolymers based on styrene, copolymers based on vinyl esters of fatty acids, copolymers based on acrylates of fatty alcohols, copolymers based on methacrylates of fatty alcohols, copolymers based on ethers of fatty alcohols and their mixtures, and biopolymers,
- a plasticizer with a content by weight of 0.1% to 50% with respect to the total weight of the coating composition C1, and
- a filling agent with a content of 0.1% to 60% by weight with respect to the total weight of the coating composition C1,
a) the two films, being separated prior to the injection of the cheese material, and once the injection has been performed, follows
b) shaping of at least a coated cheese product by pressure on the outer face of each of the two said coating films in order to obtain a coated cheese product comprising a cheese core comprising the said cheese material and a coating that is malleable at the storage temperature of the said coated cheese product and sealed against moisture and microorganisms, and completely surrounds the core at its periphery, wherein the said coating is formed by assembly by pressure of the two said coating films comprising at least an outer layer of the said coating composition C1,
wherein the shaping step is carried out by introducing the two coating films and the cheese material together between two rotating rollers featuring complementary half-cavities to impress the a desired shape on the coated cheese products, the sealing area being integrated in the coating surface.

2. Method according to claim 1, wherein the said films each further comprises, on its inner face, at least one inner layer of a coating composition C2 in the gelled state, which is different from the said coating composition C1, and wherein the coating obtained after the shaping step b) comprises at least an outer layer of the said coating composition C1, and at least one inner layer, which is different from the said at least one outer layer, consisting of a coating composition C2, between the core and the said at least one outer layer.

3. Method according to claim 1, further comprising, prior to the injection step a), a step to form the two coating films including the provision of at least the said coating composition C1 in the viscous state.

4. Method according to claim 2, further comprising, prior to the injection step a), a step to form the two coating films comprising the provision of at least the said coating composition C1 in the viscous state and the provision of at least the said coating composition C2 in the viscous state.

5. Method according to any one of the claims 3 or 4, wherein the provision of the said coating composition C1 and/or C2 in the viscous state is followed by a cooling step capable of gelling the said coating composition C1 and/or C2.

6. Method according to any one of the claims 1 to 5, wherein the cheese material is a processed cheese, a fresh cheese, a fresh processed cheese or a cheese obtained by a recombinant method.

7. Method according to claim 1, wherein the filler is a mineral filler, typically selected from the group consisting of talc, kaolin, calcium carbonate, calcium sulphate, sodium chloride, and their mixtures thereof.

8. Method according to any one of the claims 2 to 7, wherein the said coating composition C2 is an aqueous coating composition comprising at least one polysaccharide or a polysaccharide derivative.

9. Method according to claim 8, wherein the polysaccharide or polysaccharide derivative is selected from the group consisting of starch and its derivatives, cellulose and its derivatives, cellophane, alginate, pectate, xanthan, gellan, carrageenan, pulullane, chitosan, chitin and hydrophilic gums.

10. Coated cheese product obtainable according to the method as defined in any one of the claims 1 to 9,
wherein the coated cheese product comprises a cheese material and a coating that is malleable at the storage temperature of the said coated cheese product and sealed against moisture and microorganisms, and that completely surrounds the core at the periphery thereof,
wherein said coating is formed by two coating films, said films being malleable at the storage temperature of the said coated cheese product and comprising each on the outer face, at least one external layer consisting of a coating composition C1 in the gelled state,
the said coating composition comprising:
- at least one hydrophobic polymer, or a mixture of hydrophobic polymers, wherein the weight of the at least one hydrophobic polymer or the mixture of hydrophobic polymers is at least 5% with respect to the total weight of the coating composition C1, the hydrophobic polymer being selected from the group consisting of polyolefin copolymers based on vinyl acetate, copolymers based on styrene, copolymers based on vinyl esters of fatty acids, copolymers based on acrylates of fatty alcohols, copolymers based on methacrylates of fatty alcohols, copolymers based on ethers of fatty alcohols and their mixtures, and biopolymers,
- a plasticizer with a content by weight of 0.1% to 50% with respect to the total weight of the coating composition C1, and
- a filling agent with a content of 0.1% to 60% by weight with respect to the total weight of the coating composition C1,
and wherein the sealing area is integrated in the coating surface.

11. Coated cheese product comprising a core comprising a cheese material and a coating that is malleable at the storage temperature of the said coated cheese product and sealed against moisture and microorganisms, and that completely surrounds the core at the periphery thereof, wherein the said cheese is a processed cheese, a fresh cheese, a fresh processed cheese or a cheese obtained by a recombinant method, wherein the sealing area is integrated in the coating surface, wherein the coating composition comprises at least one hydrophobic polymer, or a mixture of hydrophobic polymers, wherein the weight of the at least one hydrophobic polymer or the mixture of hydrophobic polymers is at least 5% with respect to the total weight of the coating composition C1, the hydrophobic polymer being selected from the group consisting of polyolefin copolymers based on vinyl acetate, copolymers based on styrene, copolymers based on vinyl esters of fatty acids, copolymers based on acrylates of fatty alcohols, copolymers based on methacrylates of fatty alcohols, copolymers based on ethers of fatty alcohols and their mixtures, and biopolymers,
a plasticizer with a content by weight of 0.1% to 50% with respect to the total weight of the coating composition C1, and
a filling agent with a content of 0.1% to 60% by weight with respect to the total weight of the coating composition C1.
